# EUROPEAN PATENT SPECIFICATION

(11) **EP 4 647 876 B1**
(45) Date of publication and mention of the grant of the patent: **19.08.2026**
(21) Application number: 24753521.4
(22) Date of filing: 25.01.2024
(51) Int. Cl.: G06F 3/01, G06F 3/0481, G06F 3/04842, G06F 3/00, G06F 1/16, G06T 15/00, G06T 15/50, G06T 19/00, G06T 19/20

(54) **WEARABLE DEVICE FOR RENDERING VIRTUAL OBJECT ON BASIS OF EXTERNAL LIGHT, AND METHOD THEREFOR**
WEARABLE-VORRICHTUNG ZUR DARSTELLUNG EINES VIRTUELLEN OBJEKTS AUF BASIS VON EXTERNEM LICHT UND VERFAHREN DAFÜR
DISPOSITIF À PORTER SUR SOI POUR RENDRE UN OBJET VIRTUEL SUR LA BASE D'UNE LUMIÈRE EXTERNE, ET PROCÉDÉ ASSOCIÉ

(30) Priority: 08.02.2023 KR 20230016722; 20.03.2023 KR 20230036145
(43) Date of publication of application: 12.11.2025
(73) Proprietor: Samsung Electronics Co., Ltd., Suwon-si, Gyeonggi-do 16677 (KR)
(72) Inventor: CHO, Minkyung, Suwon-si Gyeonggi-do 16677 (KR); SON, Dongil, Suwon-si Gyeonggi-do 16677 (KR)
(74) Representative: Appleyard Lees IP LLP
(86) International application number: PCT/KR2024/001241
(87) International publication number: WO 2024/167191

(56) References cited:
- JP-A- 2007 018 173
- JP-A- 2008 033 531
- JP-A- 2016 162 142
- KR-A- 20090 125 249
- KR-B1- 102 262 521
- US-A1- 2022 366 615
- US-B1- 10 540 812

## Description

### [Technical Field]

The present disclosure relates to a wearable device for performing rendering with respect to a virtual object based on external light, and a method, therefore.

### [Background Art]

In order to provide enhanced user experience, an electronic device that provides an augmented reality (AR) service displaying information generated by a computer in association with external objects in the real-world is being developed. The electronic device may be a wearable device that may be worn by a user. For example, the electronic device may be AR glasses and/or a head-mounted device (HMD).

The above-described information may be provided as a related art for the purpose of helping understanding of the present disclosure. No claim or determination is raised as to whether any of the above-described descriptions may be applied as a prior art related to the present disclosure.

Document US10540812B1 discloses a method for handling real world light sources in extended reality settings. The method identifies a property of a real world light source and instructs an extended reality engine to render a virtual light source according to the real world light property.

Document US2022366615A1 discloses a method for operating an extended reality device. The method combines real world light with virtual light effects. The resulting combination is displayed to the user of the extended reality device.

### [Disclosure]

### [Technical Solution]

A wearable device according to an embodiment may comprise a camera, a display, and a processor. The processor may be configured to obtain, by using an image obtained from the camera, information associated with at least one real light source. The processor may be configured to receive, while displaying at least a portion of the image obtained from the camera on the display, an input to display a virtual space on the display. The processor may be configured to determine, based on the input, a position of at least one virtual light source in the virtual space using the information. The processor may be configured to display, based on a distance between a virtual object included in the virtual space and a position of the virtual space corresponding to the wearable device, the virtual object to which a visual effect with respect to the at least one virtual light source is applied on the display.

A method of a wearable device according to an embodiment may comprise obtaining, by using an image obtained from a camera of the wearable device, information associated with at least one real light source. The method may comprise receiving, while displaying at least a portion of the image obtained from the camera on a display of the wearable device, an input to display a virtual space on the display. The method may comprise determining, based on the input, a position of at least one virtual light source in the virtual space using the information. The method may comprise display, based on a distance between a virtual object included in the virtual space and a position of the virtual space corresponding to the wearable device, the virtual object to which a visual effect with respect to the at least one virtual light source is applied on the display.

A wearable device according to an embodiment may comprise a camera, a display, and a processor. The processor may be configured to obtain, by using the camera, information associated with at least one real light source disposed in an external space including the wearable device. The processor may be configured to identify, based on the information, a first region of a virtual space linked with a virtual light source corresponding to the real light source. The processor may be configured to perform, in a state of displaying the virtual space distinguished from the external space on the display, from among a plurality of virtual objects included in the virtual space, rendering with respect to a first virtual object included in the first region based on a visual effect associated with the virtual light source. The processor may be configured to perform, on the display, from among the plurality of virtual objects, rendering with respect to a second virtual object included in a second region different from the first region, independently of the visual effect.

A method of a wearable device according to an embodiment may comprise obtaining, by using a camera of the wearable device, information associated with at least one real light source disposed in an external space including the wearable device. The method may comprise identifying, based on the information, a first region of a virtual space linked with a virtual light source corresponding to the real light source. The method may comprise performing, in a state of displaying the virtual space distinguished from the external space on the display, from among a plurality of virtual objects included in the virtual space, rendering with respect to a first virtual object included in the first region based on a visual effect associated with the virtual light source. The method may comprise performing, on the display, from among the plurality of virtual objects, rendering with respect to a second virtual object included in a second region different from the first region, independently of the visual effect.

A wearable device according to an embodiment may comprise a camera, a display, memory storing instructions, and a processor. The instructions, when executed by the processor, may cause the wearable device to obtain, by using an image obtained from the camera, information associated with at least one real light source. The instructions, when executed by the processor, may cause the wearable device to receive, while displaying at least a portion of the image obtained from the camera on the display, an input to display a virtual space on the display. The instructions, when executed by the processor, may cause the wearable device to determine, based on the input, a position of at least one virtual light source in the virtual space using the information. The instructions, when executed by the processor, may cause the wearable device to obtain a distance between a virtual object included in the virtual space and a position of a user within the virtual space. The instructions, when executed by the processor, may cause the wearable device to display, based on obtaining the distance greater than a preset distance, the virtual object to which a visual effect with respect to the at least one virtual light source is applied on the display.

In an embodiment, a method of a wearable device may be provided. The method may comprise obtaining, by using an image obtained from a camera of the wearable device, information associated with at least one real light source. The method may comprise receiving, while displaying at least a portion of the image obtained from the camera on the display of the wearable device, an input to display a virtual space on the display. The method may comprise determining, based on the input, a position of at least one virtual light source in the virtual space using the information. The method may comprise obtaining a distance between a virtual object included in the virtual space and a position of a user within the virtual space. The method may comprise displaying, based on obtaining the distance greater than a preset distance, the virtual object to which a visual effect with respect to the at least one virtual light source is applied on the display.

### [Description of the Drawings]

FIGS. 1A to 1B illustrate an example of a screen displayed by a wearable device according to an embodiment.
FIG. 2 illustrates an example of a block diagram of a wearable device according to an embodiment.
FIGS. 3A to 3B illustrate an example of a flowchart of a wearable device according to an embodiment.
FIG. 4 illustrates an example of an operation of a wearable device that determines a position of a real light source based on a plurality of images.
FIG. 5 illustrates an example of a flowchart of a wearable device according to an embodiment.
FIG. 6 illustrates an example of a flowchart of a wearable device according to an embodiment.
FIG. 7 illustrates an example of a flowchart of a wearable device according to an embodiment.
FIG. 8 illustrates an example of an operation of a wearable device that identifies a real light source of an external space.
FIG. 9 illustrates an example of a flowchart of a wearable device according to an embodiment.
FIGS. 10A to 10B illustrate an example of an operation of a wearable device that performs rendering with respect to a virtual space based on information associated with a real light source of an external space.
FIGS. 11A to 11B illustrate an example of an operation of a wearable device that performs rendering with respect to a virtual object included in a virtual space based on information associated with a real light source of an external space.
FIG. 12 illustrates an example of a flowchart of a wearable device according to an embodiment.
FIG. 13 illustrates an example of an operation of a wearable device that performs rendering with respect to a virtual space based on a movement of a real light source.
FIG. 14 illustrates an example of an operation of a wearable device that performs rendering with respect to a virtual space based on a brightness distribution of an external space.
FIG. 15 illustrates an example of a flowchart of a wearable device according to an embodiment.
FIG. 16A illustrates an example of a perspective view of a wearable device according to an embodiment.
FIG. 16B illustrates an example of one or more hardware disposed in a wearable device according to an embodiment.
FIGS. 17A to 17B illustrate an example of an exterior of a wearable device according to an embodiment.
FIG. 18 is an exemplary diagram of a network environment associated with a metaverse service.

### [Mode for Invention]

Hereinafter, various embodiments of the present document will be described with reference to the accompanying drawings.

The various embodiments of the present document and terms used herein are not intended to limit the technology described in the present document to specific embodiments, and should be understood to include various modifications and equivalents. In relation to the description of the drawings, a reference numeral may be used for a similar component. A singular expression may include a plural expression unless it is clearly meant differently in the context. In the present document, an expression such as "A or B", "at least one of A and/or B", "A, B or C", or "at least one of A, B and/or C", and the like may include all possible combinations of items listed together. Expressions such as "1st", "2nd", "first" or "second", and the like may modify the corresponding components regardless of order or importance, is only used to distinguish one component from another component, but does not limit the corresponding components. When a (e.g., first) component is referred to as "connected (functionally or communicatively)" or "accessed" to another (e.g., second) component, the component may be directly connected to the other component or may be connected through another component (e.g., a third component).

The term "module" used in the present document may include a unit configured with hardware, software, or firmware, and may be used interchangeably with terms such as logic, logic block, component, or circuit, and the like. The module may be an integrally configured component or a minimum unit or part thereof that performs one or more functions. For example, a module may be configured with an application-specific integrated circuit (ASIC).

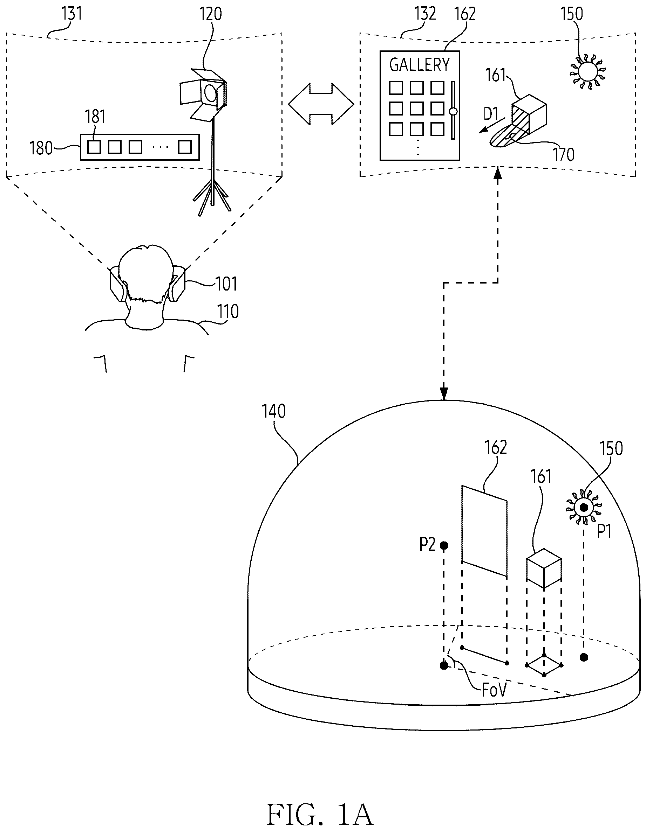

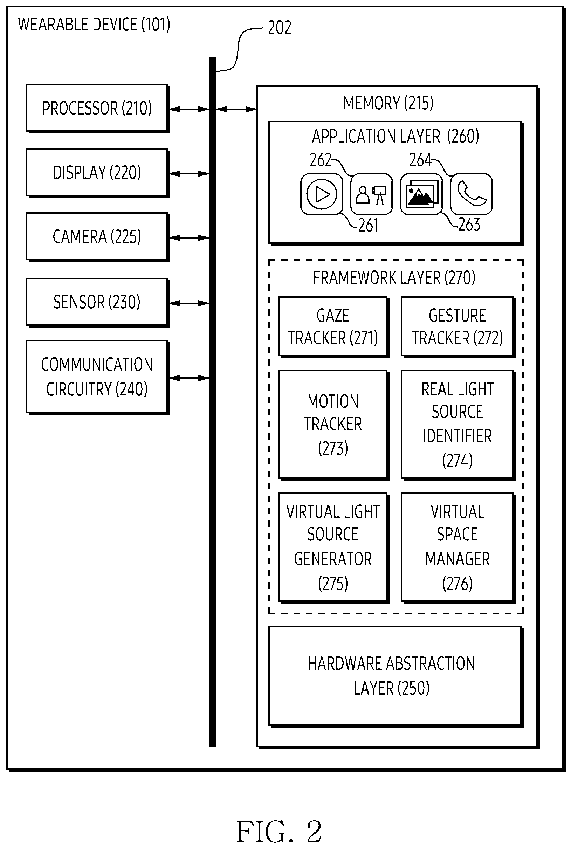

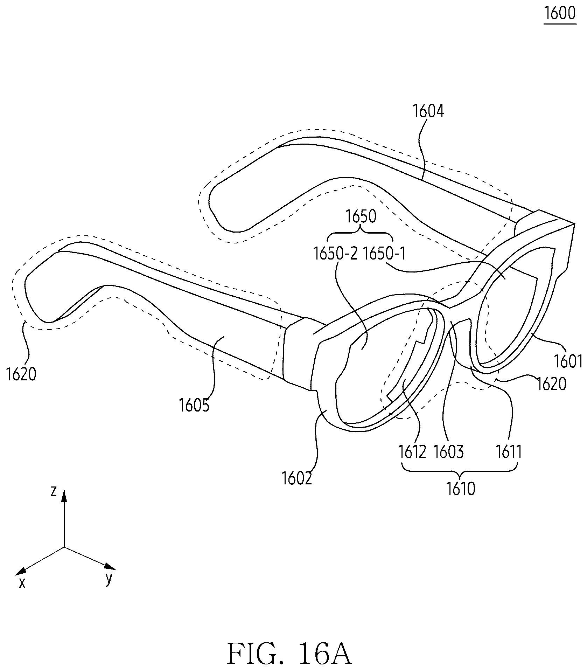

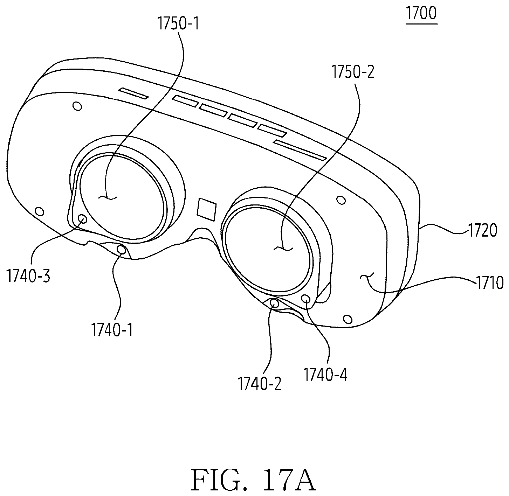

FIGS. 1A to 1B illustrate an example of a screen displayed by a wearable device 101 according to an embodiment. In an embodiment, the wearable device 101 may include a head-mounted display (HMD) that is wearable on a head of a user 110. Although an external shape of the wearable device 101 having a shape of glasses is illustrated, an embodiment is not limited thereto. An example of one or more hardware included in the wearable device 101 will be exemplarily described with reference to FIG. 2. An example of a structure of the wearable device 101 that is wearable on the head of the user 110 will be described with reference to FIGS. 16A to 16B and/or FIGS. 17A to 17B. The wearable device 101 may be referred to as an electronic device. For example, the electronic device may form the HMD by being coupled with an accessory to be attached to the head of the user.

The wearable device 101 according to an embodiment may execute a function associated with video see-through (VST) and/or virtual reality (VR). In a state in which the user 110 wears the wearable device 101, the wearable device 101 according to an embodiment may include a housing covering eyes of the user 110. The wearable device 101 may include a display disposed on a first surface of the housing facing the eyes in the state. The wearable device 101 may include a camera disposed on a second surface opposite to the first surface. Using the camera, the wearable device 101 may obtain images in which ambient light is included. The wearable device 101 may enable the user 110 to recognize the ambient light through the display by sequentially outputting the images within the display disposed on the first surface. A display region of the display disposed on the first surface may be formed by one or more pixels included in the display. The wearable device 101 may enable the user 110 to recognize a virtual object together with a real object recognized by the ambient light, by synthesizing the virtual object in frames outputted through the display.

The wearable device 101 according to an embodiment may execute functions associated with augmented reality (AR) and/or mixed reality (MR). As shown in FIGS. 1A to 1B, in a state in which the user 110 wears the wearable device 101, the wearable device 101 may include at least one lens disposed adjacent to the eyes of the user 110. The wearable device 101 may combine ambient light passing through a lens with light emitted from the display of the wearable device 101. The display region of the display may be formed in the lens through which the ambient light passes. Since the wearable device 101 combines the ambient light and the light emitted from the display, the user 110 may see an image in which the real object recognized by the ambient light and the virtual object formed by the light emitted from the display are mixed.

Referring to FIG. 1A, screens 131 and 132 displayed by the wearable device 101 in different modes are illustrated. Referring to FIG. 1A, the wearable device 101 may display the screen 131 in a first preset mode referred to as a VST mode. In the VST mode, the wearable device 101 may display the screen 131 including an image and/or a video obtained through the camera. In the VST mode, the user 110 wearing the wearable device 101 may recognize an external space including the wearable device 101 through the screen 131 independently of the housing covering both eyes of the user 110. In the VST mode, the wearable device 101 may display one or more virtual objects (e.g., virtual objects 180 and 181) on the screen 131 together with the image and/or the video with respect to the external space. For example, the wearable device 101 may display the virtual object 181 having a shape of an icon representing an application on the virtual object 180 having a shape of a panel. In an embodiment, the virtual object 180 may be referred to as an application tray (or an app tray). In response to an input of selecting the virtual object 181, the wearable device 101 may execute the application and display the screen 132 provided from the application.

Referring to FIG. 1A, the wearable device 101 may display the screen 132 in a second preset mode referred to as a VR mode. In the VR mode, the wearable device 101 may display the screen 132 representing at least a portion of a virtual space 140. In the VR mode, the wearable device 101 according to an embodiment may display the screen 132 based on a field-of-view (FoV) formed in the virtual space 140. Referring to FIG. 1A, the wearable device 101 may display, on the screen 132, virtual objects 161 and 162 included in the FoV of the virtual space 140. On the screen 132, the wearable device 101 may display the virtual objects 161 and 162 having perspective using binocular disparity. The virtual objects 161 and 162 included in the screen 132 may include a graphic object, a window (e.g., an activity), and/or a widget (or a gadget) provided from a program (e.g., a software application) executed by the wearable device 101. Referring to FIG. 1A, in the wearable device 101, the virtual object 161 having a three-dimensional shape and the virtual object 162 having a window shape are exemplarily illustrated, but an embodiment is not limited thereto.

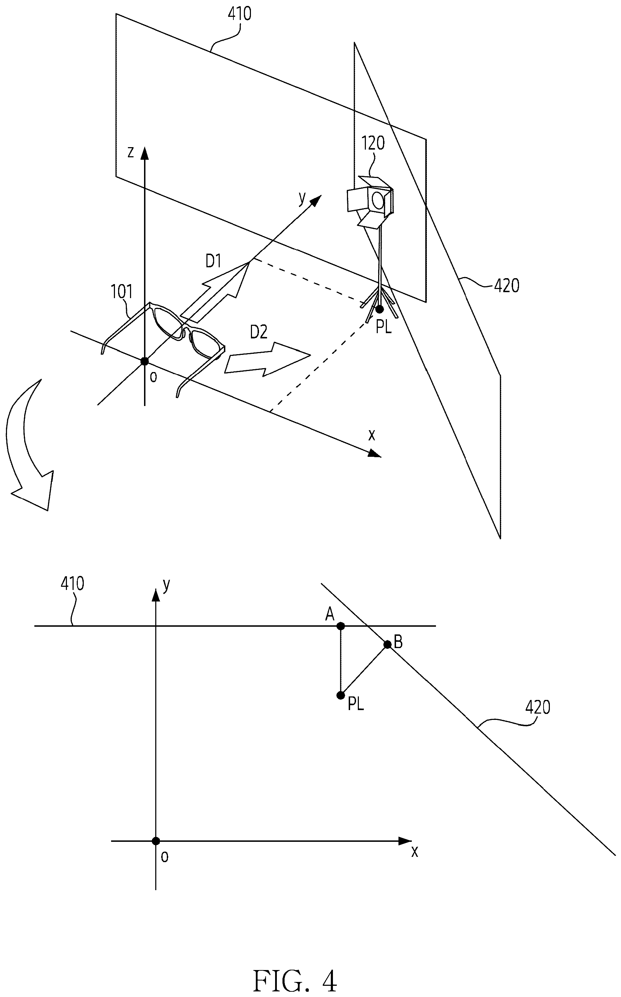

The wearable device 101 according to an embodiment may recognize at least one real light source (e.g., a floor lamp 120) in the external space. The wearable device 101 recognizing the real light source may include an operation of identifying at least one of a position of the real light source in the external space, color or brightness of light emitted from the real light source. Referring to FIG. 1A, the wearable device 101 adjacent to the floor lamp 120 that is an example of the real light source is exemplarily illustrated. The wearable device 101 operating in the VST mode may identify the floor lamp 120 using a camera facing a front direction of the user 110 wearing the wearable device 101. The wearable device 101 according to an embodiment may obtain information associated with the at least one real light source by using an image obtained from the camera. An operation in which the wearable device 101 according to an embodiment recognizes the real light source will be described with reference to FIGS. 4 to 9.

The wearable device 101 according to an embodiment may identify an input to display a virtual space on the display while displaying at least a portion of the image obtained from the camera on the display, such as the screen 131. The input may include an input to select the virtual object 181 having a shape of an icon representing an application for providing the virtual space 140. An embodiment is not limited thereto, and the input may include at least one of a remote controller connected to the wearable device 101, a button included in the wearable device 101, or a voice command (e.g., a remark triggering a display of the virtual space 140) of the user 110.

The wearable device 101 according to an embodiment may determine or identify, based on the input, a position of at least one virtual light source 150 in the virtual space 140 using the information. In an exemplary case of FIG. 1A in which the wearable device 101 identifies the floor lamp 120, the wearable device 101 may determine a position P1 of the virtual light source 150 corresponding to the floor lamp 120, which is the real light source, in the virtual space 140 based on a positional relationship between the floor lamp 120 and the wearable device 101. The positional relationship may include at least one of a distance between the floor lamp 120 and the wearable device 101 or an azimuth angle of the floor lamp 120 with respect to the wearable device 101. In an embodiment, based on the input to switch from the first preset mode for VST to the second preset mode for VR associated with the virtual space 140, the wearable device 101 may determine the position of the virtual light source 150 in the virtual space 140 corresponding to the floor lamp 120, which is the real light source.

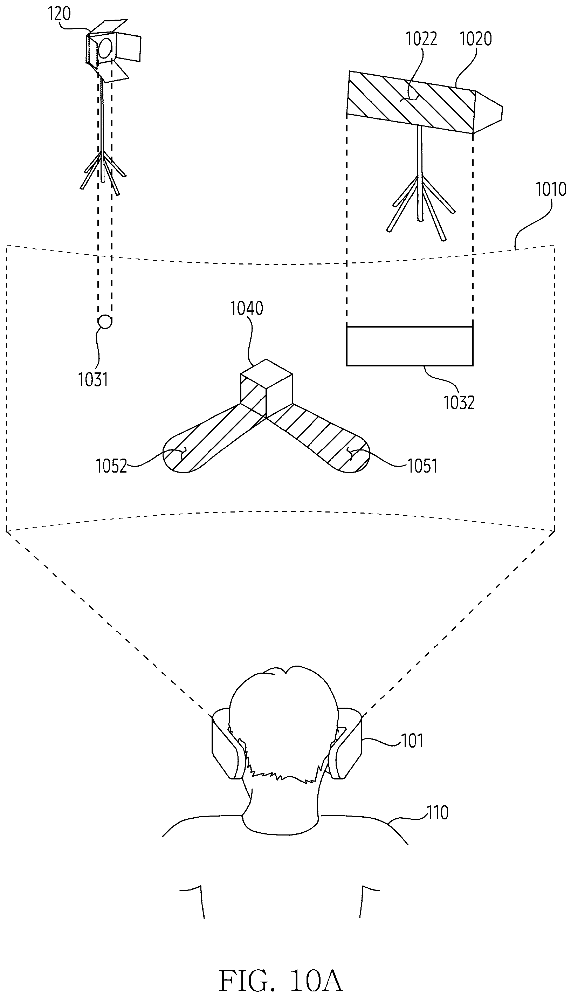

The wearable device 101 according to an embodiment may perform rendering with respect to the virtual space 140 including the virtual light source 150 using the virtual light source 150 corresponding to the real light source (e.g., the floor lamp 120). An embodiment is not limited thereto, and the wearable device 101 may adjust illuminance in the virtual space 140 based on the real light source. For example, independently of the virtual light source 150 corresponding to the real light source, the electronic device 101 may perform rendering with respect to the virtual space 140 having illuminance and/or color associated with the real light source. Hereinafter, rendering may include one or more functions for displaying an image and/or a video (e.g., the screen 132) representing the virtual space 140. In a case that a position P2 of the virtual space 140 corresponds to the wearable device 101, the positional relationship between the wearable device 101 and the floor lamp 120 may match a positional relationship between the position P2 of the virtual space 140 and the position P1 of the virtual light source 150. For example, the position of the real light source (e.g., floor lamp 120) visible through the screen 131 in the VST mode may be mapped to the position of the virtual light source 150 rendered on the screen 132 in the VR mode. The wearable device 101 according to an embodiment may perform rendering associated with light (hereinafter, virtual light) emitted from the virtual light source 150 based on color, brightness, and/or intensity (or strength) of light (hereinafter, real light) emitted from the real light source (e.g., the floor lamp 120). An operation of the wearable device 101 according to an embodiment that performs rendering based on at least one virtual light source corresponding to the at least one real light source will be described with reference to FIGS. 10A to 10B, 11A to 11B, and 12 to 15.

The wearable device 101 according to an embodiment may apply a visual effect with respect to the at least one virtual light source 150 to the virtual object, based on a distance between a virtual object (e.g., the virtual objects 161 or 162) included in the virtual space 140 and the position P2 of the virtual space 140 corresponding to the wearable device 101. The wearable device 101 displaying the virtual object may include an operation of rendering with respect to the virtual object and/or the virtual space 140 including the virtual object. The wearable device 101 applying the visual effect with respect to the virtual light source 150 may include at least one of an operation of at least partially changing color and/or brightness of the virtual object, or an operation of displaying a shadow extending from the virtual object, based on virtual light emitted from the virtual light source 150. Referring to FIG. 1A, the wearable device 101 may display a visual object 170 representing a shadow extending from the virtual object 161 along a direction D1 from the virtual light source 150 toward the virtual object 161. The wearable device 101 according to an embodiment may perform rendering with respect to the virtual object 161 spaced apart by a distance exceeding a preset threshold from the position P2, using the visual effect with respect to the virtual light source 150.

The wearable device 101 according to an embodiment may apply the visual effect associated with the virtual light source 150 to the virtual object by using at least one of the position P1 of the virtual light source 150 in the virtual space 140, a position of the virtual object, a category, or the position P2 corresponding to the wearable device 101 in the virtual space 140. For example, based on whether the virtual object is included in a preset category for interaction with the user 110 wearing the wearable device 101, the wearable device 101 may identify and/or determine whether to apply the visual effect to the virtual object. The preset category may include a panel having a shape of a two-dimensional plane referred to as a window. Embodiments are not limited thereto, and the preset category may include virtual objects that is deployable within the screen 132 and/or the virtual space 140 for transmission and/or interaction of information, such as text, an image, an icon, a video, a button, a check box, a radio button, a text box, a slider, a time picker, a progress bar, and/or a table. Referring to FIG. 1A, in a state of displaying the virtual object 162, which is a window for interacting with the user 110, the wearable device 101 may cease applying the visual effect associated with the virtual light source 150 to the virtual object 162. For example, the wearable device 101 may perform rendering with respect to the virtual object 162 independently of the visual effect associated with the virtual light source 150.

As described above, the wearable device 101 according to an embodiment may perform rendering with respect to the virtual space 140 for VR based on information on an environment (e.g., the external space including the wearable device 101) including the wearable device 101. For example, the wearable device 101 may dispose the virtual light source 150 corresponding to the real light source (e.g., the floor lamp 120) included in the external space in the virtual space 140. Based on the virtual light source 150 disposed in the virtual space 140, the wearable device 101 may perform rendering with respect to the one or more virtual objects 161 and 162 included in the virtual space 140. For example, the wearable device 101 that displays the screen 131 including the floor lamp 120, which is the real light source, based on the VST mode, may display the rendered screen 132 based on the virtual light source 150 corresponding to the floor lamp 120 after switching from the VST mode to the VR mode. The wearable device 101 may provide continuous user experience while switching from the VST mode to the VR mode by using the virtual light source 150 corresponding to the floor lamp 120.

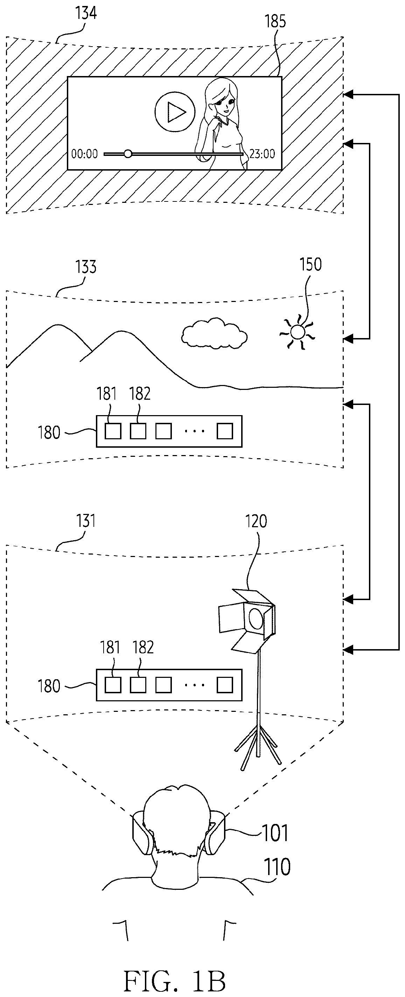

Referring to FIG. 1B, screens 131, 133, and 134 displayed by the wearable device 101 in the VST mode and/or the VR mode are exemplarily illustrated. Referring to FIG. 1B, in a state of displaying the screen 131 based on the VST mode, the wearable device 101 may display a virtual object 180 including options for a change of a mode. Within the virtual object 180, the wearable device 101 may display an icon (e.g., virtual objects 181 and 182) representing an application running in a mode (e.g., the VR mode) different from the VST mode.

Referring to FIG. 1B, in response to an input indicating a display of the screen 133 based on the VR mode, the wearable device 101 may display the screen 133 provided from the application. For example, based on identifying an input indicating selection of the virtual object 181, the wearable device 101 may display the screen 133. The screen 133 displayed by the wearable device 101 may include a preset screen (e.g., a home screen) based on the VR mode. The preset screen may include an object (e.g., an icon) to execute at least one of one or more functions supported by the wearable device 101. In a state of displaying the screen 133, the wearable device 101 may dispose the virtual light source 150 corresponding to the real light source such as the floor lamp 120 in a virtual space. Based on the virtual light source 150 disposed in the virtual space, the wearable device 101 may display the screen 133 to which the visual effect associated with the virtual light source 150 is applied.

Referring to FIG. 1B, in response to an input indicating execution of an application for the VR mode, the wearable device 101 may display the screen 133 provided from the application. For example, based on identifying an input indicating selection of the virtual object 182, the wearable device 101 may display the screen 133. The virtual object 182 may include an icon of an application for providing an immersive virtual reality. The wearable device 101 may display the screen 134 based on the immersive virtual reality by executing the application corresponding to the virtual object 182. In a state of displaying the screen 134 including the virtual object 185 for playing a video, the wearable device 101 may at least temporarily cease rendering based on the virtual light source corresponding to the real light source. For example, in order to improve user experience based on the immersive virtual reality, the wearable device 101 may restrict rendering based on the virtual light source.

Hereinafter, an example of one or more hardware and/or software included in the wearable device 101 of FIGS. 1A and 1B will be described with reference to FIG. 2.

FIG. 2 illustrates an example of a block diagram of a wearable device 101 according to an embodiment. The wearable device 101 of FIG. 2 may include the wearable device 101 of FIGS. 1A to 1B.

The wearable device 101 according to an embodiment may include at least one of a processor 210, memory 215, a display 220, a camera 225, a sensor 230, or communication circuitry 240. The processor 210, the memory 215, the display 220, the camera 225, the sensor 230, and the communication circuitry 240 may be electronically and/or operably coupled with each other by an electronical component such as a communication bus 202. Hereinafter, hardware being operably coupled may mean that a direct connection or an indirect connection between the hardware is established by wire or wirelessly so that second hardware among the hardware is controlled by first hardware. Although illustrated based on different blocks, an embodiment is not limited thereto, and a portion (e.g., at least a portion of the processor 210, the memory 215, and the communication circuitry 240) of the hardware of FIG. 2 may be included in a single integrated circuit such as a system on a chip (SoC). A type and/or the number of hardware included in the wearable device 101 is not limited as illustrated in FIG. 2. For example, the wearable device 101 may include only a portion of hardware components illustrated in FIG. 2.

In an embodiment, the processor 210 of the wearable device 101 may include hardware for processing data based on one or more instructions. The hardware for processing data may include, for example, an arithmetic and logic unit (ALU), a floating point unit (FPU), a field programmable gate array (FPGA), a central processing unit (CPU), and/or an application processor (AP). The processor 210 may have a structure of a single-core processor, or may have a structure of a multi-core processor such as a dual core, a quad core, or a hexa core.

In an embodiment, the memory 215 of the wearable device 101 may include a hardware component for storing data and/or instructions inputted in and/or outputted from the processor 210 of the wearable device 101. The memory 215 may include, for example, volatile memory such as random-access memory (RAM) and/or non-volatile memory such as read-only memory (ROM). The volatile memory may include, for example, at least one of dynamic RAM (DRAM), static RAM (SRAM), cache RAM, and pseudo SRAM (PSRAM). The non-volatile memory may include, for example, at least one of programmable ROM (PROM), erasable PROM (EPROM), electrically erasable PROM (EEPROM), flash memory, a hard disk, a compact disk, a solid state drive (SSD), and an embedded multi media card (eMMC).

In an embodiment, the display 220 of the wearable device 101 may output visualized information (e.g., a screen of FIGS. 1A to 1B, 10A to 10B, 11A to 11B, and/or 13 to 14) to a user (e.g., the user 110 of FIGS. 1A to 1B). For example, the display 220 may output the visualized information to the user, by being controlled by the processor 210 that includes circuitry such as a graphic processing unit (GPU). The display 220 may include a flat panel display (FPD) and/or electronic paper. The FPD may include a liquid crystal display (LCD), a plasma display panel (PDP), and/or one or more light emitting diodes (LEDs). The LED may include an organic LED (OLED). The display 220 of FIG. 2 may include at least one display 1650 and 1750 to be described later with reference to FIGS. 16A to 16B and/or 17A to 17B.

In an embodiment, the camera 225 of the wearable device 101 may include one or more optical sensors (e.g., a charged coupled device (CCD) sensor and a complementary metal oxide semiconductor (CMOS) sensor) that generate an electrical signal indicating color and/or brightness of light. A plurality of optical sensors included in the camera 225 may be disposed in a shape of a 2 dimensional array. The camera 225 may generate 2 dimensional frame data corresponding to light reaching the optical sensors of the 2 dimensional array by obtaining electrical signals of each of the plurality of optical sensors substantially simultaneously. For example, photo data captured using the camera 225 may mean one a 2 dimensional frame data obtained from the camera 225. For example, video data captured using the camera 225 may mean a sequence of a plurality of 2 dimensional frame data obtained from the camera 225 according to a frame rate. The camera 225 may be disposed toward a direction in which the camera 225 receives light, and may further include a flash light for outputting light toward the direction.

The sensor 230 of the wearable device 101 according to an embodiment may generate electronic information that may be processed by the processor 210 and/or the memory 215 of the wearable device 101 from non-electronic information associated with the wearable device 101. The information may be referred to as sensor data. The sensor 230 may include a global positioning system (GPS) sensor for detecting a geographic location of the wearable device 101, an image sensor, an illumination sensor and/or a time-of-flight (ToF) sensor, and an inertial measurement unit (IMU) for detecting a physical motion of the wearable device 101. In an embodiment, the IMU may include at least one of an acceleration sensor, a gyro sensor, or a gravity sensor. Using the IMU, the processor 210 of the wearable device 101 may identify a motion of the wearable device 101 based on 6 degrees of freedom (DoF). The motion of the wearable device 101 based on the 6 degrees of freedom may include movement and rotation (e.g., roll, pitch, and yaw) of the wearable device 101 on three axes (e.g., an x-axis, a y-axis, and a z-axis) perpendicular to each other.

In an embodiment, the communication circuitry 240 of the wearable device 101 may include hardware components for supporting transmission and/or reception of an electrical signal between the wearable device 101 and an external electronic device (e.g., a remote controller connected to the wearable device 101). The communication circuit 240 may include, for example, at least one of a MODEM, an antenna, and an optic/electronic (O/E) converter. The communication circuitry 240 may support transmission and/or reception of an electrical signal based on various types of protocols such as Ethernet, a local area network (LAN), a wide area network (WAN), wireless fidelity (WiFi), Bluetooth, Bluetooth low energy (BLE), ZigBee, long term evolution (LTE), 5G new radio (NR), and/or 6G.

Although not illustrated, the wearable device 101 according to an embodiment may include an output means for outputting information in a form other than the visualized form. For example, the wearable device 101 may include a speaker for outputting an acoustic signal. For example, the wearable device 101 may include a motor for providing haptic feedback based on vibration.

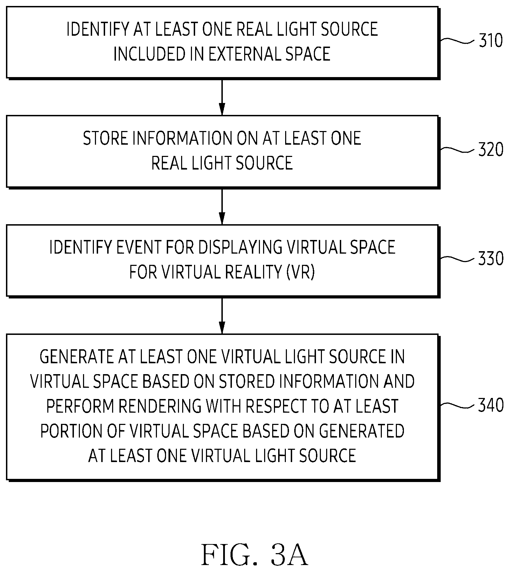

Referring to FIG. 2, in the memory 215 of the wearable device 101 according to an embodiment, one or more instructions (or commands) indicating a calculation and/or an operation to be performed on data by the processor 210 of the wearable device 101 may be stored. A set of the one or more instructions may be referred to as a program, firmware, an operating system, a process, a routine, a sub-routine and/or an application. Hereinafter, an application being installed in an electronic device (e.g., the wearable device 101) may mean that one or more instructions provided in a form of the application are stored in the memory 215, and that the one or more applications are stored in a format (e.g., a file with an extension preset by an operating system of the wearable device 101) executable by a processor of the electronic device. The wearable device 101 according to an embodiment may perform an operation of FIGS. 3A to 3B, FIGS. 5 to 7, FIG. 9, FIGS. 12, and/or 15 by executing the one or more instructions stored in the memory 215.

Referring to FIG. 2, programs installed in the wearable device 101 may be classified into any one of different layers including an application layer 260, a framework layer 270, and/or a hardware abstraction layer (HAL) 250, based on a target. For example, in the hardware abstraction layer 250, programs (e.g., a driver) designed to target hardware of the wearable device (e.g., the display, the camera 225, the sensor 230, and/or the communication circuitry 240) may be classified. For example, in the framework layer 270, programs designed to target at least one of hardware abstraction layer 250 and/or the application layer 260 (e.g., a gaze tracker 271, a gesture tracker 272, a motion tracker 273, a real light source identifier 274, a virtual light source generator 275, and/or a virtual space manager 276) may be classified. The programs classified into the framework layer 270 may provide an application programming interface (API) that is executable based on another program.

Referring to FIG. 2, in the application layer 260, a program designed to target a user (e.g., the user 110 of FIGS. 1A to 1B) controlling the wearable device 101 may be classified. For example, the program classified into the application layer 260 may include at least one of an application 261 for playback and/or streaming of a video, an application 262 for video conferencing, an application 263 for browsing media content (e.g., an image and/or a video) of the memory 215, or an application 264 for call connection. An embodiment is not limited thereto. For example, the program classified into the application layer 260 may cause execution of a function supported by the programs classified into the framework layer 270 by calling the API.

Referring to FIG. 2, the wearable device 101 according to an embodiment may process information associated with a gaze of the user wearing the wearable device 101 based on execution of the gaze tracker 271 in the framework layer 270. For example, the wearable device 101 may obtain an image including eyes of the user from a first camera disposed toward the eyes of the user in a state of being worn by the user. Based on a position and/or a direction of a pupil included in the image, the wearable device 101 may identify a direction of the gaze of the user.

Referring to FIG. 2, the wearable device 101 according to an embodiment may identify a motion of a preset body part including a hand based on execution of the gesture tracker 272 in the framework layer 270. For example, the wearable device 101 may obtain an image and/or a video including the body part from a second camera. Based on the motion and/or a posture of the preset body part indicated by the image and/or the video, the wearable device 101 may identify a gesture performed by the preset body part.

Referring to FIG. 2, the wearable device 101 according to an embodiment may identify a motion of the wearable device 101 based on execution of the motion tracker 273 in the framework layer 270. In a state in which the wearable device 101 is worn by the user, the motion of the wearable device 101 may be associated with a motion of a head of the user. For example, the wearable device 101 may identify a direction of the wearable device 101 that substantially matches a direction of the head. The wearable device 101 may identify the motion of the wearable device 101 based on sensor data of the sensor 230 including the IMU.

Referring to FIG. 2, the wearable device 101 according to an embodiment may obtain information on an external space that includes the wearable device 101 or is adjacent to the wearable device 101, based on execution of the real light source identifier 274 in the framework layer 270. For example, the wearable device 101 may obtain information on a real light source (e.g., the floor lamp 120 of FIGS. 1A to 1B) disposed in the external space including the wearable device 101 using the camera 225. An embodiment is not limited thereto, and the wearable device 101 may obtain the information using the sensor 230 (e.g., an illuminance sensor). The information obtained based on the execution of the real light source identifier 274 may include a position (e.g., a three dimensional position of the real light source in the external space), a shape, brightness, and/or color with respect to at least one real light source. The processor 210 of the wearable device 101 according to an embodiment may store the information obtained based on the execution of the real light source identifier 274 in the memory 215. The wearable device 101 according to an embodiment may monitor the at least one real light source included in the external space based on the execution of the real light source identifier 274.

Referring to FIG. 2, based on the information obtained by the real light source identifier 274, the wearable device 101 according to an embodiment may dispose at least one virtual light source in a virtual space (e.g., the virtual space 140 of FIG. 1A) based on execution of the virtual light source generator 275 in the framework layer 270. An embodiment is not limited thereto, and the wearable device 101 may indirectly dispose the at least one virtual light source based on a brightness distribution in the virtual space. In a state in which the virtual light source generator 275 is executed, the wearable device 101 may dispose a virtual light source having color and brightness of the real light source indicated by the information in the virtual space, based on the information obtained by the real light source identifier 274.

Referring to FIG. 2, the wearable device 101 according to an embodiment may perform rendering with respect to the virtual space based on execution of the virtual space manager 276 in the framework layer 270. In a state in which the virtual space manager 276 is executed, the wearable device 101 may perform rendering with respect to the virtual space including the at least one virtual light source disposed based on the virtual light source generator 275. In an embodiment, the wearable device 101 may identify the virtual space mapped to the external space based on the virtual space manager 276. The wearable device 101 may determine a reference position (e.g., the position P2 of FIG. 1A) of the virtual space to form a FoV (e.g., the FoV of FIGS. 1A to 1B) based on a position and/or a direction of the wearable device 101 in the external space identified based on the data of the sensor 230. The reference position may correspond to a position of the wearable device 101 in the virtual space. In an embodiment, the wearable device 101 may perform simultaneous localization and mapping (SLAM) to recognize the external space and to recognize the position of the wearable device 101 in the external space.

As described above, the wearable device 101 according to an embodiment may identify at least one real light source in the external space including the wearable device 101 by using the real light source identifier 274. In a VST mode (or an AR mode), the wearable device 101 may obtain information on the at least one real light source based on the real light source identifier 274. Based on switching from the VST mode to a VR mode, the wearable device 101 according to an embodiment may dispose at least one virtual light source in the virtual space based on the information , and perform rendering with respect to the virtual space using the at least one virtual light source. The wearable device 101 according to an embodiment may selectively apply a visual effect based on the at least one virtual light source to a plurality of virtual objects included in the virtual space. For example, in a case that the virtual light source is included in a FoV of the virtual space, the wearable device 101 may restrict the application of the visual effect according to a position of the virtual object included in the FoV. For example, in order to prevent counter light with respect to the virtual object by the virtual light source included in the FoV and/or a shadow caused in the virtual object by the virtual light source, the wearable device 101 may restrict the application of the visual effect. The wearable device 101 may determine whether to apply the visual effect with respect to the virtual object in a region within the virtual space linked with the virtual light source and/or in a category of the virtual object to which the visual effect is to be applied.

Hereinafter, the operation of the wearable device 101 of FIGS. 1A to 1B and/or FIG. 2 will be described with reference to FIGS. 3A to 3B.

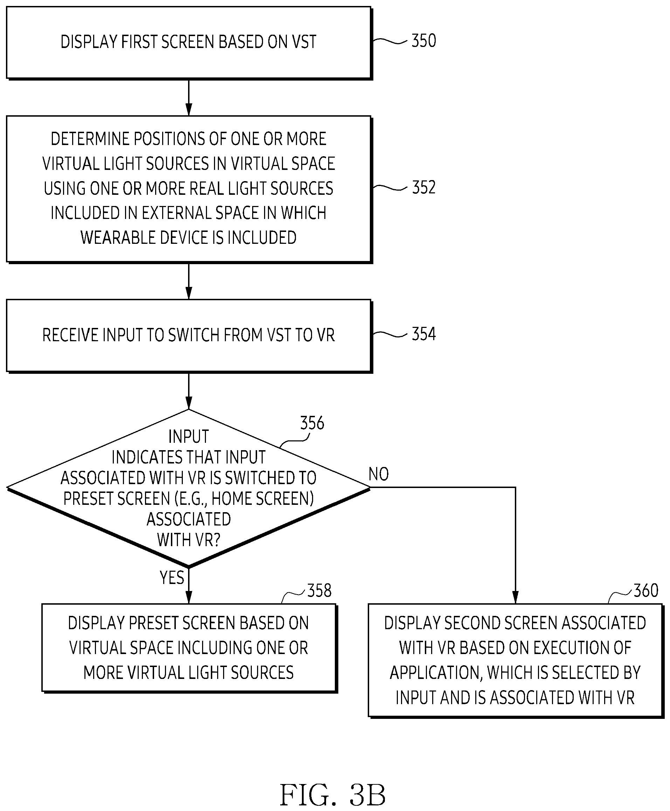

FIGS. 3A to 3B illustrate an example of a flowchart of a wearable device according to an embodiment. The wearable device 101 of FIGS. 1A to 1B and/or FIG. 2 may include the wearable device of FIGS. 3A to 3B. At least one of operations of FIGS. 3A and 3B may be performed by the wearable device 101 and/or the processor 210 of FIG. 2.

In the following embodiment, each operation may be sequentially performed, but is not necessarily performed sequentially. For example, an order of each operation may be changed, and at least two operations may be performed in parallel.

Referring to FIG. 3A, in operation 310, the wearable device according to an embodiment may identify at least one real light source included in an external space. The wearable device according to an embodiment may identify the at least one real light source based on the execution of the real light source identifier 274 of FIG. 2. The wearable device may identify a real light source commonly captured in a plurality of images by combining the plurality of images obtained from a camera (e.g., the camera 225 of FIG. 2). An operation of determining or identifying a real light source included in all of the plurality of images by the wearable device will be described with reference to FIG. 4.

Referring to FIG. 3A, in operation 320, the wearable device may according to an embodiment store information on the at least one real light source. The wearable device may store the information in memory (e.g., the memory 215 of FIG. 2). The information stored by the wearable device may include at least one of a position, a shape, color, illumination, brightness, or intensity of the real light source identified by the wearable device in the external space. The information stored in the wearable device based on operation 320 may include one or more parameters for reconstructing a virtual light source corresponding to the real light source in a virtual space. The information in operation 320 may be referred to as characteristic information on the at least one real light source.

Referring to FIG. 3A, in operation 330, the wearable device according to an embodiment may identify an event for displaying the virtual space for virtual reality (VR). The event may be generated by an input (e.g., the input indicating selection of the virtual object 181 of FIGS. 1A to 1B) to execute an application. The event may be generated by a preset gesture (e.g., a gesture of tapping the wearable device a preset number of times) identified by the gaze tracker 271, the gesture tracker 272, and/or the motion tracker 273 of FIG. 2. The event may be generated based on identification of a voice command including a preset remark (e.g., "Let's switch to VR mode"). An embodiment is not limited thereto.

Referring to FIG. 3A, in operation 340, the wearable device according to an embodiment may generate at least one virtual light source in the virtual space based on the stored information and perform rendering with respect to at least a portion of the virtual space based on the generated at least one virtual light source. The wearable device may perform operation 340 in response to identifying the event of operation 330. The wearable device according to an embodiment may generate the virtual space including the at least one virtual light source corresponding to the at least one real light source based on the information stored based on operation 320. The wearable device may perform operation 340 based on the execution of the virtual space manager 276 of FIG. 2. The wearable device according to an embodiment may determine a position of the at least one virtual light source in the virtual space based on the position of the at least one real light source indicated by the information in the external space. For example, the at least one virtual light source may have a fixed coordinate in the virtual space based on a world-lock.

The wearable device according to an embodiment may perform rendering with respect to the virtual space based on the at least one virtual light source disposed in the virtual space based on the information. Based on the rendering, the wearable device may obtain a screen (e.g., the screen 132 of FIG. 1A) representing virtual light emitted from the at least one virtual light source. The wearable device may provide VR including the virtual light source corresponding to the real light source to a user wearing the wearable device, by displaying the obtained screen on a display (e.g., the display 220 of FIG. 2). The wearable device obtaining the screen representing the virtual light may be performed based on an algorithm to track a path of the virtual light, such as ray tracing.

The wearable device according to an embodiment may adjust illuminance of the virtual space by using the information on the at least one real light source stored based on operation 320. For example, the wearable device may obtain a virtual space having illumination, color, and/or brightness associated with the at least one real light source without generating a virtual light source (e.g., the at least one virtual light source of operation 340). In an embodiment of generating the virtual space that does not include the virtual light source corresponding to the real light source, the wearable device may obtain the virtual space based on an appearance of the external space associated with the real light source by using the information of operation 320. Based on the virtual space, the wearable device may provide virtual reality based on the appearance of the external space to the user independently of the virtual light source. For example, the wearable device may obtain the virtual space based on a position, a shape, color, illumination, and/or brightness of the real light source by rendering the virtual space using the information of operation 320. In an embodiment, the wearable device obtaining the virtual space may be performed independently of the at least one virtual light source of operation 340.

As described above, the wearable device according to an embodiment may simulate the real light source in the virtual space using the virtual light source corresponding to the real light source. The wearable device may display at least one virtual object included in the virtual space based on real light of the real light source by using the virtual light source of the virtual space. The wearable device according to an embodiment may enable a user wearing the wearable device to recognize the virtual space having a color tone similar to that of the external space including the real light source, using the virtual space in which the real light source is simulated.

Referring to FIG. 3B, in operation 350, the wearable device according to an embodiment may display a first screen based on VST. The wearable device may display the first screen including an image and/or a video obtained through a camera (e.g., the camera 225 of FIG. 2) of the wearable device, such as the screen 131 of FIGS. 1A to 1B.

Referring to FIG. 3B, in operation 352, the wearable device according to an embodiment may determine positions of one or more virtual light sources in a virtual space using one or more real light sources included in an external space in which the wearable device is included. The wearable device may perform operation 352 of FIG. 3B based on operations 310, 320, and 330 of FIG. 3A. For example, the wearable device may generate and/or dispose the one or more virtual light sources in the virtual space based on positions, color, illumination, and/or brightness of the one or more real light sources.

Referring to FIG. 3B, in operation 354, the wearable device according to an embodiment may receive an input to switch from VST to VR. The input may include an input indicating selection of an application designed based on a VR mode. The input may include an input indicating a display of a preset screen (e.g., a home screen) based on the VR mode. The input may be identified by a motion of a head and/or a hand of a user tracked by the wearable device. The input may be identified by an external electronic device (e.g., a remote controller) connected to the wearable device. The input may be identified by a button and/or a sensor (e.g., a touch sensor) of the wearable device.

Referring to FIG. 3B, in operation 356, the wearable device according to an embodiment may identify whether the input indicates a switch to the preset screen (e.g., the home screen based on the VR mode) associated with VR. The preset screen of operation 356 may include the screen 133 of FIG. 1B. Based on operation 354, in a state of receiving the input indicating the switch to the preset screen (356-YES), the wearable device may perform operation 358. In a state of receiving another input independent of the preset screen (356-NO), the wearable device may perform operation 360.

Referring to FIG. 3B, in operation 358, the wearable device according to an embodiment may display the preset screen based on the virtual space including the one or more virtual light sources. The wearable device may apply a visual effect based on the one or more virtual light sources to one or more virtual objects included in the virtual space. The preset screen of operation 358 may include the screen 133 of FIG. 1B.

Referring to FIG. 3B, in operation 360, the wearable device according to an embodiment may display a second screen associated with VR based on execution of the application, which is identified or selected by an input, and is associated with VR. The second screen may be provided from an application for providing an immersive VR. The second screen of operation 360 may include the screen 134 of FIG. 1B. In a state of displaying the second screen of operation 360, the wearable device may limit or cease applying the visual effect based on the one or more virtual light sources. An embodiment is not limited thereto, and the wearable device may receive an input indicating application of the visual effect while executing the application of operation 360. In response to the input, the wearable device may display the virtual space and/or the second screen including at least one virtual object to which the visual effect based on the one or more virtual light sources is applied. In order to receive the input for applying the visual effect, the wearable device may display a visual object in a shape of a pop-up window in response to the input of operation 354. For example, in the visual object, the wearable device may display preset text, such as "Do you want to render a virtual space based on a real light source?".

Hereinafter, an exemplary operation of the wearable device that obtains information on a real light source based on a plurality of images will be described with reference to FIG. 4.

FIG. 4 illustrates an example of an operation of a wearable device 101 that determines a position of a real light source based on a plurality of images. The wearable device of FIGS. 1A to 1B and FIGS. 2 to 3A to 3B may include the wearable device 101 of FIG. 4. The operation of the wearable device 101 described with reference to FIG. 4 may be performed by the wearable device 101 and/or the processor 210 of FIG. 2. The operation of the wearable device 101 described with reference to FIG. 4 may be associated with at least one (e.g., operation 310 of FIG. 3A) of the operations of FIGS. 3A to 3B.

Referring to FIG. 4, the wearable device 101 according to an embodiment may determine or identify a position of the wearable device 101 in an external space based on a spatial coordinate system formed by three axes (e.g., an x-axis, a y-axis, and a z-axis of FIG. 4) that are perpendicular each other. The position of the wearable device 101 may correspond to an origin O of the spatial coordinate system. A specific point of the spatial coordinate system may be matched to a specific point of the external space including the wearable device 101. The wearable device 101 according to an embodiment may identify the position and/or a motion of the wearable device 101 in the spatial coordinate system using the sensor 230 (e.g., the IMU) of FIG. 2.

Referring to FIG. 4, the wearable device 101 according to an embodiment may obtain images 410 and 420 with respect to different directions D1 and D2 of the wearable device 101 using a camera (e.g., the camera 225 of FIG. 2). The camera may be disposed on another surface opposite to a surface of the wearable device 101 on which a display (e.g., the display 220 of FIG. 2) is disposed. The camera may have another direction opposite to a direction of the display. The wearable device 101 may identify a direction of the wearable device 101 by using data from a sensor (e.g., the sensor 230 of FIG. 2) such as an IMU. Based on the data indicating the direction of the wearable device 101 obtained from the sensor, the wearable device 101 may obtain the image 410 corresponding to the direction D1 and the image 420 corresponding to the direction D2. For example, in a state of obtaining the image 410 corresponding to the direction D1, the wearable device 101 may obtain the image 420 corresponding to the direction D2 from the camera, in response to identifying the motion of the wearable device 101 that is rotated toward the direction D2 based on the sensor.

Referring to FIG. 4, the wearable device 101 according to an embodiment may perform object recognition on the images 410 and 420 with respect to the different directions D1 and D2 using the spatial coordinate system. The wearable device 101 may identify at least one of a position, a shape, brightness, and/or color of a real light source by performing the object recognition. For example, the wearable device 101 may identify a category of the real light source, such as natural light and artificial light. For example, the wearable device 101 may determine a subject in the images 410 and 420 matched to a characteristic of the real light source (e.g., whether to have brightness exceeding preset brightness or whether to have preset color such as white) as the real light source by performing the object recognition. The object recognition may be performed by a program (e.g., a program for executing an artificial intelligence model) executed by wearable device 101. In an embodiment, the wearable device 101 may perform the object recognition on the images 410 and 420 by communicating with an external electronic device (e.g., a server) connected to the wearable device 101.

For example, it is assumed that a floor lamp (e.g., the floor lamp 120 of FIGS. 1A to 1B) is captured on all of the images 410 and 420. The wearable device 101 may dispose the images 410 and 420 based on the directions D1 and D2 in the spatial coordinate system. Based on identifying the floor lamp 120 captured at a point A of the image 410 and a point B of the image 420, the wearable device 101 may identify an intersection point PL of lines extending from the points A and B. For example, the wearable device 101 may identify whether an external object (e.g., the real light source) such as the floor lamp 120 has been commonly captured in the images 410 and 420 by comparing a color distribution of the images 410 and 420. The wearable device 101 may determine a coordinate of the intersection point PL in the spatial coordinate system as a coordinate of the floor lamp 120 commonly captured in the images 410 and 420. Since the spatial coordinate system matches the external space, the wearable device 101 may determine a position of the floor lamp 120 in the external space based on the coordinate of the intersection point PL.

As described above, the wearable device 101 according to an embodiment may identify the position of the real light source in the external space based on positions of the real light source identified in each of the plurality of images 410 and 420. The wearable device 101 may determine a position of a virtual light source in a virtual space mapped to the external space based on the position of the real light source. For example, the wearable device 101 may dispose the virtual light source associated with the floor lamp 120 at a point in the virtual space corresponding to the intersection point PL in the spatial coordinate system of FIG. 4. For example, a three dimensional xyz coordinate of the intersection point PL may be used to obtain a three dimensional xyz coordinate of the virtual light source disposed in the virtual space by the wearable device 101. The wearable device 101 may provide user experience (or mood) associated with reflection of light in the virtual space by using the virtual light source disposed in the virtual space.

An exemplary operation of the wearable device 101 for obtaining information on the real light source using the camera has been described, but an embodiment is not limited thereto. For example, the wearable device 101 may obtain information on the real light source using an illuminance sensor, a time-of-flight (ToF) sensor, one or more cameras, or any combination thereof.

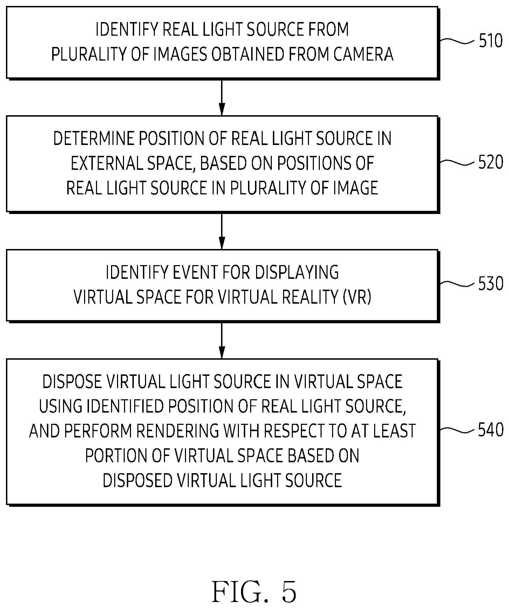

Hereinafter, an operation in which the wearable device 101 according to an embodiment identifies the real light source will be described with reference to FIGS. 5 to 7.

FIG. 5 illustrates an example of a flowchart of a wearable device according to an embodiment. The wearable device of FIGS. 1A to 1B and FIGS. 2 to 3A to 3B may include the wearable device of FIG. 5. An operation of the wearable device described with reference to FIG. 5 may be performed by the wearable device 101 and/or the processor 210 of FIG. 2. At least one of operations of FIG. 5 may be associated with the operation of the wearable device 101 of FIG. 4.

In the following embodiment, each operation may be sequentially performed, but is not necessarily performed sequentially. For example, an order of each operation may be changed, and at least two operations may be performed in parallel.

Referring to FIG. 5, in operation 510, the wearable device according to an embodiment may identify a real light source from a plurality of images (e.g., the images 410 and 420 of FIG. 4) obtained from a camera (e.g., the camera 225 of FIG. 2). For example, the wearable device may identify the real light source commonly included in all of the plurality of images. The wearable device may compare one or more characteristic points included in the plurality of images or perform operation 510 using an artificial neural network. The artificial neural network used to identify the real light source of operation 510 may be formed based on a structure for analyzing an image and/or a video, such as a convolutional neural network (CNN).

Referring to FIG. 5, in operation 520, the wearable device according to an embodiment may identify a position of the real light source in an external space based on positions of the real light source in the plurality of images. As shown in the points A and B of FIG. 4, the wearable device may determine or identify the positions of the real light source included in all of the plurality of images in each of the plurality of images. Using the positions of the plurality of images and directions (e.g., the directions D1 and D2 of FIG. 4) of the plurality of images, the wearable device may identify the position of the real light source in three-dimension. In an embodiment, the wearable device may obtain information on brightness and/or color of the real light source based on operation 320 of FIG. 3A together with the position of the real light source of operation 520.

Referring to FIG. 5, in operation 530, the wearable device according to an embodiment may identify an event for displaying a virtual space for virtual reality (VR). In an embodiment, the wearable device may identify the event of operation 530, similar to operation 330 of FIG. 3A. In an embodiment, the wearable device may identify the event of operation 530 in a state of performing operations 510 and 520 based on a VST mode.

Referring to FIG. 5, in operation 540, the wearable device according to an embodiment may dispose a virtual light source in the virtual space using the position of the real light source identified based on operation 520, and perform rendering with respect to at least a portion of the virtual space based on the disposed virtual light source. The wearable device may perform operation 540 in response to the event of operation 530. The wearable device may dispose the virtual light source corresponding to the real light source at a position in the virtual space mapped to the position of operation 520. The wearable device may perform rendering with respect to the at least a portion of the virtual space based on the virtual light source. For example, the wearable device may perform rendering with respect to the virtual space based on a visual effect based on the virtual light source.

As described above, the wearable device according to an embodiment may perform rendering with respect to the virtual space based on a result of identifying a position, color, brightness, and/or intensity of the real light source (or real light) existing in the external space. Since the virtual space is rendered based on the result, the wearable device may provide user experience similar to viewing the real light source in a VR-based screen. While the wearable device is switched from the VST mode to a VR mode, the wearable device may provide user experience in which the real light source is maintained in the virtual space to the user.

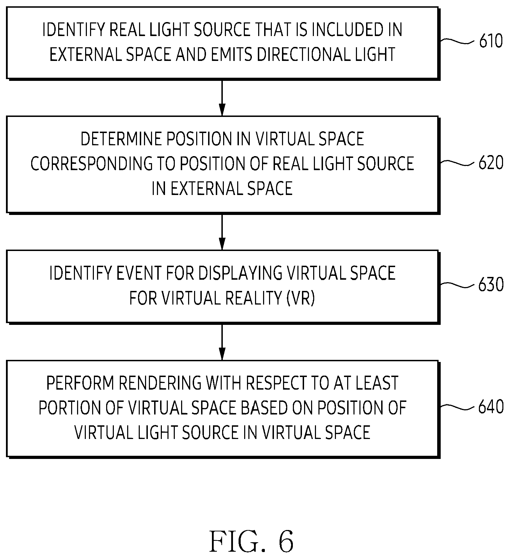

Real light sources identified by the wearable device according to an embodiment based on the operations of FIG. 5 may have different shapes. Hereinafter, an operation of the wearable device for identifying the real light sources having different shapes will be described with reference to FIGS. 6 to 8.

FIG. 6 illustrates an example of a flowchart of a wearable device according to an embodiment. The wearable device of FIGS. 1A to 1B and FIGS. 2 to 3A to 3B may include the wearable device of FIG. 6. An operation of the wearable device described with reference to FIG. 6 may be performed by the wearable device 101 and/or the processor 210 of FIG. 2. At least one of operations of FIG. 6 may be associated with the operation of FIG. 5.

In the following embodiment, each operation may be sequentially performed, but is not necessarily performed sequentially. For example, an order of each operation may be changed, and at least two operations may be performed in parallel.

Referring to FIG. 6, in operation 610, the wearable device according to an embodiment may identify a real light source that is included in an external space and emits directional light. The wearable device may identify the real light source designed to emit light in a specific direction, such as the floor lamp 120 and/or the spot lighting of FIGS. 1A to 1B. The wearable device according to an embodiment may perform operation 610 of FIG. 6 based on operation 510 of FIG. 5.

Referring to FIG. 6, in operation 620, the wearable device according to an embodiment may determine a position in a virtual space corresponding to a position of the real light source in the external space. The wearable device according to an embodiment may determine or identify the position of the real light source in the external space using a plurality of images (e.g., the images 410 and 420 of FIG. 4) obtained using a camera (e.g., the camera 225 of FIG. 2). For example, the wearable device may perform operation 620 of FIG. 6 similar to operation 520 of FIG. 5. In an embodiment, the wearable device may store information on the real light source. The wearable device may store the information in memory (e.g., the memory 215 of FIG. 2). The wearable device may store a direction, color, and/or brightness of the directional light propagated from the real light source in the information. In an embodiment, the wearable device may store, in the information, elements of a three dimensional vector (e.g., a vector based on the spatial coordinate system of FIG. 4) indicating the direction of the directional light, together with a parameter indicating that the real light source is a light source emitting the directional light.

Referring to FIG. 6, in operation 630, the wearable device according to an embodiment may identify an event for displaying the virtual space for virtual reality (VR). The wearable device may perform operation 630 of FIG. 6, similar to operation 330 of FIG. 3A and/or operation 530 of FIG. 5. For example, the wearable device identifying the event of operation 630 may execute one or more applications (e.g., a VR application) to provide the virtual space based on the event.

Referring to FIG. 6, in operation 640, the wearable device according to an embodiment may perform rendering with respect to at least a portion of the virtual space based on a position of a virtual light source in the virtual space. In a state of identifying the real light source emitting the directional light of operation 610, the wearable device may dispose the virtual light source emitting the directional light in the virtual space based on operation 640. Since the wearable device performs rendering with respect to the virtual space based on the virtual light source, the wearable device may obtain and/or display a screen representing the directional light emitted from the virtual light source. A direction in which light outputted from the virtual light source is propagated in the virtual space may substantially match a direction in which light outputted from the real light source is propagated in the external space.

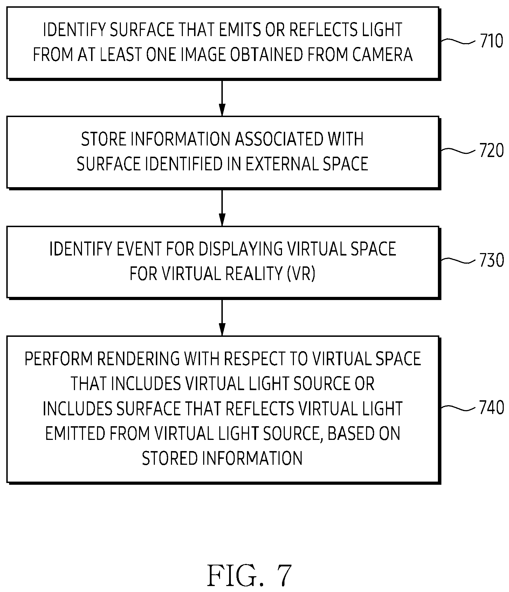

Although the operation of the wearable device with respect to the real light source emitting the directional light has been described, an embodiment is not limited thereto. For example, the wearable device may identify a real light source emitting light through a surface formed in two dimensions to three dimensions, such as a surface light source. Hereinafter, an operation in which the wearable device according to an embodiment identifies the surface light source will be described with reference to FIG. 7.

FIG. 7 illustrates an example of a flowchart of a wearable device according to an embodiment. The wearable device of FIGS. 1A to 1B, 2, 3A to 3B may include the wearable device of FIG. 7. An operation of the wearable device described with reference to FIG. 7 may be performed by the wearable device 101 and/or the processor 210 of FIG. 2. At least one of operations of FIG. 7 may be associated with the operations of FIGS. 5 to 6.

In the following embodiment, each operation may be sequentially performed, but is not necessarily performed sequentially. For example, an order of each operation may be changed, and at least two operations may be performed in parallel.

Referring to FIG. 7, in operation 710, the wearable device according to an embodiment may identify a surface that emits or reflects light from at least one image obtained from a camera (e.g., the camera 225 of FIG. 2). Operation 710 of FIG. 7 may be performed similarly to operation 510 of FIG. 5 and/or operation 610 of FIG. 6. The wearable device according to an embodiment may identify the surface of operation 710 based on a brightness (or luminance) distribution in the image. An embodiment is not limited thereto, and the wearable device may identify the surface of operation 710 based on a color distribution in the image. The color distribution may be associated with intensities of three primary colors (e.g., red, green, and blue) in each of pixels included in the image.

For example, in a case that light of a real light source is reflected from a surface captured by the camera, brightness of a portion corresponding to the surface may be brighter than that of another portion in the image obtained from the camera. In the example, the wearable device may identify a virtual light source having a shape of the surface based on a position of the portion in the image. For example, in a case that the real light source including a shape of a plane and/or a curved surface, such as a surface light source, is adjacent to the wearable device, the wearable device may identify the shape of the plane and/or the curved surface of the real light source by using the at least one image.

Referring to FIG. 7, in operation 720, the wearable device according to an embodiment may store information associated with the surface identified in an external space based on operation 710. The wearable device may store the information in memory (e.g., the memory 215 of FIG. 2). The wearable device according to an embodiment may perform operation 720 similar to operation 320 of FIG. 3A, operation 520 of FIG. 5, and/or operation 620 of FIG. 6. The wearable device may store color, brightness, and/or a direction of real light emitted and/or reflected from the surface in the information. The wearable device may store a shape of the surface emitting and/or reflecting the light in the information. For example, the wearable device may store coordinates of vertices of the surface in the information based on a spatial coordinate system (e.g., the spatial coordinate system of FIG. 4).

Referring to FIG. 7, in operation 730, the wearable device according to an embodiment may identify an event for displaying a virtual space for VR. The wearable device may perform operation 730 of FIG. 7, similar to operation 330 of FIG. 3A, operation 530 of FIG. 5, and/or operation 630 of FIG. 6. Based on the event of operation 730, the wearable device may initiate rendering with respect to the virtual space corresponding to the event.

Referring to FIG. 7, in operation 740, the wearable device according to an embodiment may perform rendering with respect to the virtual space that includes the virtual light source or includes the surface that reflects virtual light emitted from the virtual light source, based on the information stored in operation 720. In a state of identifying the real light source including the surface of operation 710 , the wearable device may dispose the virtual light source having the shape of the surface in the virtual space based on operation 740. Since the wearable device performs rendering in operation 740 based on the virtual light source, the wearable device may obtain and/or display a screen representing the virtual light emitted in a shape of a surface from the virtual light source.

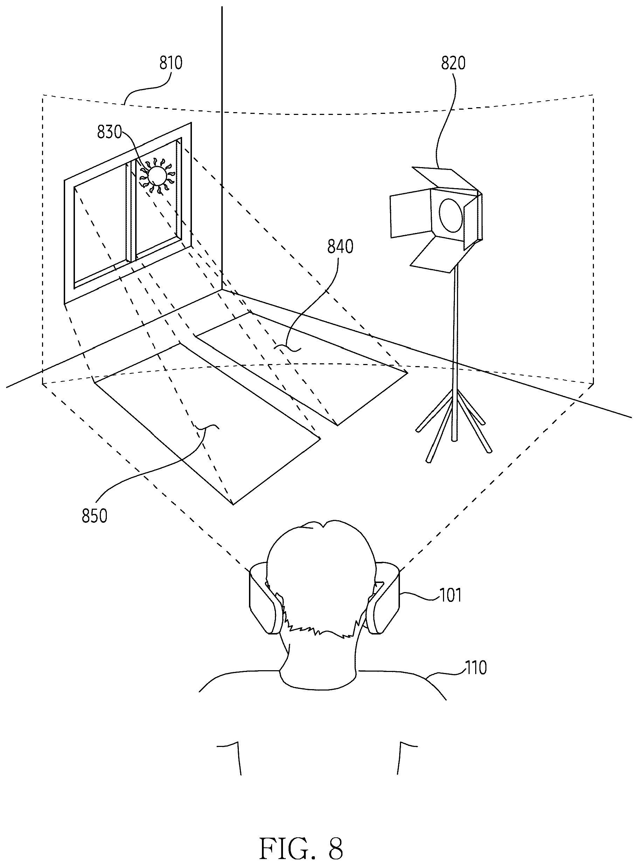

Hereinafter, an operation of the wearable device identifying one or more real light sources by the operations of FIGS. 4 to 7 will be described based on an exemplary case of FIG. 8.

FIG. 8 illustrates an example of an operation of a wearable device 101 that identifies a real light source of an external space. The wearable device of FIGS. 1A to 1B, 2, 3A to 3B may include the wearable device 101 of FIG. 8. The operation of the wearable device 101 described with reference to FIG. 8 may be performed by the wearable device 101 and/or the processor 210 of FIG. 2. The operation of the wearable device 101 of FIG. 8 may be associated with the operations of FIGS. 3A to 3B and 4 to 7.

Referring to FIG. 8, an example of a screen 810 displayed by the wearable device 101 operating in a VST mode is illustrated. The screen 810 may include an image and/or a video including a front direction (e.g., a direction in which two eyes of the user 110 face) of a user 110 wearing the wearable device 101. The wearable device 101 according to an embodiment may identify one or more real light sources 820 and 830 from the image and/or the video.

For example, the wearable device 101 may identify the spot light source 820, which is a real light source that emits directional light, based on an image obtained from a camera (e.g., the camera 225 of FIG. 2) for displaying the screen 810. The wearable device 101 may determine a position of the spot light source 820 in the external space based on the operation described with reference to FIGS. 4 to 6. Based on determining the position of the spot light source 820, the wearable device 101 may store information used to dispose a virtual light source corresponding to the spot light source 820 in a virtual space. The wearable device 101 may store at least one of the position, color, brightness, or intensity of the spot light source 820 in the information.

For example, in a state of displaying the screen 810 based on the VST mode, the wearable device 101 may identify a sun 830, which is the real light source, from the image corresponding to the screen 810. The wearable device 101 may identify the sun 830 in the image based on the operation described with reference to FIGS. 4 to 5. Based on identifying the sun 830, the wearable device 101 may store information used to dispose a virtual light source corresponding to the sun 830 in the virtual space. The wearable device 101 may store, in the information, at least one of a position of the sun 830 in the external space, and color, brightness, or intensity of the sun 830. The wearable device 101 may store a path of the sun 830 in the information based on identifying the sun 830. The path stored in the information may indicate a position of the sun 830 after a timing at which the sun 830 is identified.

For example, the wearable device 101 may identify a surface that emits and/or reflects light from an image including a portion of the external space. Referring to FIG. 8, in an image corresponding to the screen 810, the wearable device 101 may identify surfaces 840 and 850 that reflect light propagated from the sun 830. In the image, brightness of a portion corresponding to the surfaces 840 and 850 may be greater than brightness of another portion. The wearable device 101 according to an embodiment may classify the surfaces 840 and 850 reflecting the light as an indirect light source. The wearable device 101 may store information for rendering the light reflected from the surfaces 840 and 850 in the virtual space. The wearable device 101 may store at least one of a shape, a position, or a size of the surfaces 840 and 850 in the information. The wearable device 101 may store at least one of color, a direction, brightness, or intensity of the light reflected from the surfaces 840 and 850 in the information. The wearable device 101 may store information on a real light source (in an exemplary case of FIG. 8, the sun 830) corresponding to the light reflected from the surfaces 840 and 850 in the information based on identifying the surfaces 840 and 850.

As described above, the wearable device 101 2 according to an embodiment may store information based on a characteristic of the real light source. The wearable device 101 may store information on a position, color, brightness, and/or intensity of the real light source existing in the external space, as well as a characteristic (e.g., directional light) of light outputted from the real light source. Based on the information, the wearable device 101 may perform rendering with respect to a virtual object based on at least one of the color or the brightness of the real light source.

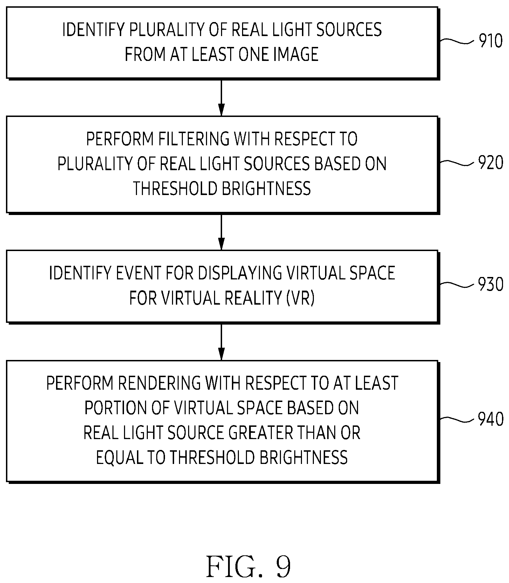

Hereinafter, an operation of the wearable device 101 that stores information corresponding to the real light source based on the brightness of the real light source will be described with reference to FIG. 9.

FIG. 9 illustrates an example of a flowchart of a wearable device according to an embodiment. The wearable device 101 of FIGS. 1A to 1B and FIGS. 2 to 3A to 3B may include the wearable device of FIG. 9. An operation of the wearable device of FIG. 9 may be performed by the wearable device 101 and/or the processor 210 of FIG. 2. At least one of operations of FIG. 9 may be associated with the operations of FIGS. 3A to 3B and/or FIGS. 5 to 7.

In the following embodiment, each operation may be sequentially performed, but is not necessarily performed sequentially. For example, an order of each operation may be changed, and at least two operations may be performed in parallel.

Referring to FIG. 9, in operation 910, the wearable device according to an embodiment may identify a plurality of real light sources from at least one image. The wearable device may perform operation 910 of FIG. 9, similar to operation 510 of FIG. 5, operation 610 of FIG. 6, and/or operation 710 of FIG. 7. The wearable device according to an embodiment may identify, based on a brightness distribution and/or a color distribution of an image obtained through a camera (e.g., the camera 225 of FIG. 2), portions of the image corresponding to each of the plurality of real light sources.

Referring to FIG. 9, in operation 920, the wearable device according to an embodiment may perform filtering with respect to the plurality of real light sources based on threshold brightness. The wearable device may identify the brightness of the plurality of real light sources based on color and/or brightness of the portions corresponding to each of the plurality of real light sources in the image. The wearable device may identify whether each of the identified brightness is greater than or equal to the threshold brightness. The wearable device may selectively store information on a real light source having brightness greater than or equal to the threshold brightness among the plurality of real light sources. For example, among the plurality of light sources, the wearable device may refrain from storing the information on the real light source having brightness less than the threshold brightness. The filtering of operation 920 may include an operation of selecting a real light source greater than or equal to the threshold brightness and storing information on the selected real light source.

Referring to FIG. 9, in operation 930, the wearable device according to an embodiment may identify an event for displaying a virtual space for VR. The wearable device may perform operation 930 of FIG. 9, similar to operation 330 of FIG. 3A, operation 530 of FIG. 5, operation 630 of FIG. 6, and/or operation 730 of FIG. 7.

Referring to FIG. 9, in operation 940, the wearable device according to an embodiment may perform rendering with respect to at least a portion of the virtual space based on the real light source greater than or equal to the threshold brightness. For example, the wearable device may dispose a virtual light source corresponding to the real light source (e.g., the real light source having brightness greater than of equal to the threshold brightness) filtered by operation 920 in the virtual space. Based on rendering with respect to the virtual space in which the virtual light source is disposed, the wearable device may display a screen (e.g., the screen 132 of FIG. 1A) including the at least a portion of the virtual space. The wearable device according to an embodiment may perform operation 940 of FIG. 9, similar to operation 340 of FIG. 3A, operation 540 of FIG. 5, operation 640 of FIG. 6, and/or operation 740 of FIG. 7.

Hereinafter, an operation of the wearable device that performs rendering with respect to at least one virtual light source disposed in the virtual space based on information on at least one real light source will be described with reference to FIGS. 10A to 10B, 11A to 11B, and 12 to 15.

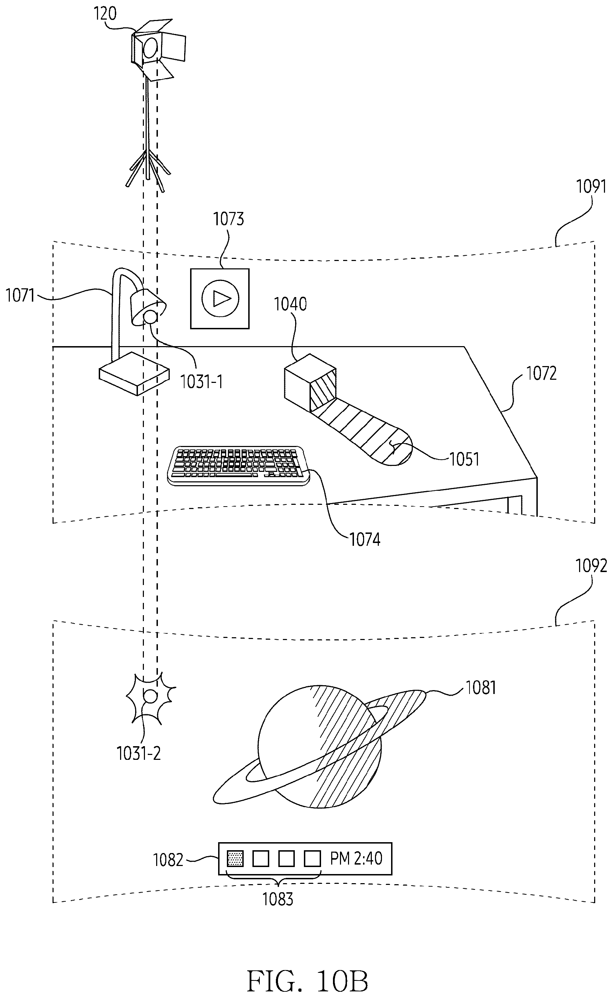

FIGS. 10A to 10B illustrate an example of an operation of a wearable device 101 that performs rendering with respect to a virtual space based on information associated with a real light source of an external space. The wearable device 101 of FIGS. 1A to 1B, 2, 3A to 3B may include the wearable device 101 of FIGS. 10A to 10B. The operation of the wearable device 101 of FIGS. 10A and 10B may be performed by the wearable device 101 and/or the processor 210 of FIG. 2.

Referring to FIGS. 10A to 10B, the wearable device 101 according to an embodiment may obtain an image and/or a video with respect to a preset direction, using a camera (e.g., the camera 225 of FIG. 2) disposed toward the preset direction. The preset direction may include a direction (e.g., a direction of a normal line) of another surface opposite to a surface of the wearable device 101 in which a display is disposed. The wearable device 101 may identify at least one real light source included in the external space from the image and/or the video. In an exemplary case of FIG. 10A, the wearable device 101 may identify a floor lamp 120, which is an example of the real light source, and a surface light source 1020, using the image and/or the video.

In a state of identifying the at least one real light source, the wearable device 101 according to an embodiment may identify an input for entering and/or switching to a VR mode. Based on the input, the wearable device 101 may display a screen 1010. The wearable device 101 may display at least a portion of a virtual space for the VR mode through the screen 1010. Based on the above-described operation with reference to FIGS. 1A to 1B and 2 to 9, the wearable device 101 may dispose a virtual light source corresponding to a real light source in the virtual space based on a result of identifying the real light source in the external space. Based on the virtual light source disposed in the virtual space, the wearable device 101 may perform rendering with respect to the virtual space.

Referring to an exemplary case of FIG. 10A, based on identifying the floor lamp 120 in the external space, the wearable device 101 according to an embodiment may dispose a virtual light source 1031 corresponding to the floor lamp 120 in the virtual space. Based on identifying the surface light source 1020 in the external space, the wearable device 101 may dispose a virtual light source 1032 corresponding to the surface light source 1020 in the virtual space. The wearable device 101 may dispose the virtual light source 1031 in the virtual space based on a position of the floor lamp 120 in the external space. A direction of virtual light emitted from the virtual light source 1031 may match a direction of real light emitted from the floor lamp 120 in the external space. A shape of the virtual light source 1032 disposed in the virtual space based on the surface light source 1020 may match a shape of a surface 1022 of the surface light source 1020 from which the real light is outputted.

Referring to FIG. 10A, the wearable device 101 may display a virtual object 1040 included in the virtual space on the screen 1010 displayed based on rendering with respect to the virtual space. Referring to FIG. 10A, based on positional relationships between the virtual light sources 1031 and 1032 and the virtual object 1040, the wearable device 101 may apply a visual effect based on the virtual light sources 1031 and 1032, to the virtual object 1040. For example, the wearable device 101 may display a visual object 1051 that starts from the virtual object 1040 and is extended along a direction from the virtual light source 1031 toward the virtual object 1040. For example, the wearable device 101 may display a visual object 1052 that starts from the virtual object 1040 and is extended along a direction from the virtual light source 1032 toward the virtual object 1040.

In an embodiment, the wearable device 101 may adjust brightness of first surfaces toward each of the virtual light sources 1031 and 1032 among different surfaces of the virtual object 1040, to be greater than or equal to brightness of second surfaces opposite to the first surfaces. The wearable device 101 may adjust color and/or brightness of a surface toward the virtual light source 1031 among the different surfaces of the virtual object 1040, based on color and/or brightness of virtual light from the virtual light source 1031 toward the virtual object 1040. Similarly, the wearable device 101 may adjust color and/or brightness of a surface of the virtual object 1040 toward the virtual light source 1032 based on color and/or brightness of virtual light from the virtual light source 1032 toward the virtual object 1040.

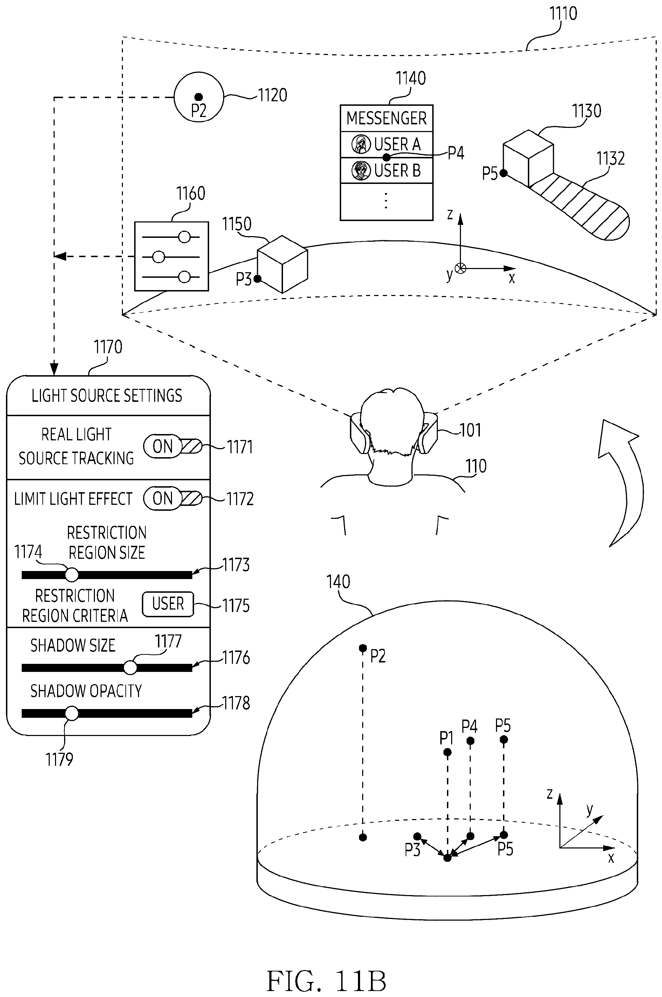

In an embodiment, the wearable device 101 may adjust the shape of the virtual light source 1031 based on the real light source (e.g., the floor lamp 120) corresponding to the virtual light source 1031, and/or the virtual space. Referring to FIG. 11B, screens 1091 and 1092 that display the shape of the virtual light source 1031 corresponding to the real light source (e.g., the floor lamp 120) in a shape corresponding to the virtual space displayed through the display are exemplarily illustrated.

Referring to FIG. 11B, in a state of displaying the screen 1091 based on a virtual space having a shape (or context) associated with an indoor environment (e.g., an office), the wearable device 101 may display a virtual light source 1031-1 having a shape suitable for the shape of the virtual space. In the state, the wearable device 101 identifying the real light source such as the floor lamp 120 may dispose the virtual light source 1031-1 in the virtual space corresponding to the identified real light source and determine the shape of the virtual light source 1031-1 based on the shape, a type, and/or the context of the virtual space.

For example, in a state of displaying a virtual space including virtual objects associated with the indoor environment, such as a virtual object 1072 having a shape of a desk, the wearable device 101 may display the virtual light source 1031-1 having a shape (e.g., a lamp) that may be disposed on a surface of the virtual object 1072. Since a visual effect based on the virtual light source 1031-1 is applied to the virtual object 1040 on the surface of the virtual object 1072, the wearable device 101 may display the virtual object 1051 representing a shadow on the surface of the virtual object 1072. An embodiment is not limited thereto, and the wearable device 101 may display a floating virtual object 1073 in the screen 1091, and/or an image 1074 with respect to at least a portion of the external space of the wearable device 101. In an embodiment, a region within the screen 1091 in which the image 1074 is displayed may be referred to as a pass-through (PT) region.

Referring to FIG. 10B, the wearable device 101 may change a shape of a virtual light source 1031-2 corresponding to the real light source (e.g., the floor lamp 120) according to a virtual space provided through the screen 1092. In a state of displaying the screen 1092 associated with the virtual space related to the universe, the wearable device 101 may display the virtual light source 1031-2 (e.g., a virtual light source having a shape of a star such as the sun) having a shape related to the universe, together with a virtual object (e.g., a virtual object 1081 having a shape of Saturn) related to the universe. The wearable device 101 may adjust a shade of the virtual object 1081 based on a positional relationship between the virtual light source 1031-2 and the virtual object 1081 in the virtual space. In an embodiment, the wearable device 101 may apply a visual effect based on the virtual light source 1031-2 to a portion of the virtual objects included in the virtual space. For example, in a state in which the visual effect is applied to the virtual object 1081, the wearable device 101 may restrict applying the visual effect to the virtual object 1082 floating on the screen 1092. For example, the wearable device 101 may not apply the visual effect to the virtual object 1082 including icons 1083 for interacting with a user wearing the wearable device 101.

As described above, the wearable device 101 according to an embodiment may perform rendering with respect to the virtual space based on the virtual light source corresponding to the real light source. The wearable device 101 may provide user experience based on the real light source moved to the virtual space to a user 110 wearing the wearable device 101 by using the virtual light source disposed in the virtual space. The wearable device 101 according to an embodiment may perform rendering based on the virtual light source, based on visibility of a virtual object. For example, in a case that the visual effect applied to the virtual object by the virtual light source reduces or removes the visibility of the virtual object, such as a shadow facing the user 110, the wearable device 101 may cease applying the visual effect to the virtual object.

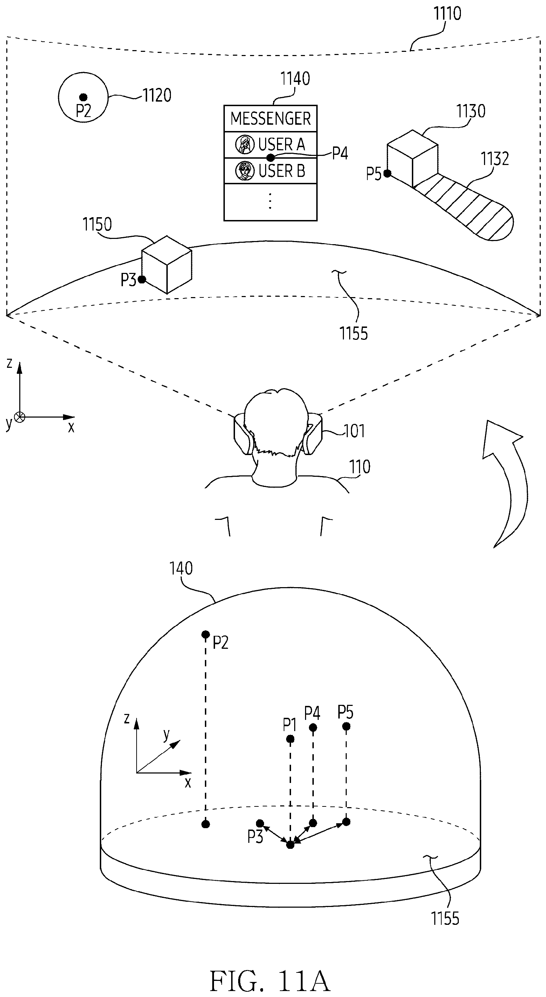

Hereinafter, an embodiment of the wearable device 101 selectively applying a visual effect based on a virtual light source to virtual objects will be described with reference to FIGS. 11A to 11B.

FIGS. 11A to 11B illustrate an example of an operation of a wearable device 101 that performs rendering with respect to a virtual object included in a virtual space 140 based on information associated with a real light source of an external space. The wearable device of FIGS. 1A to 1B, 2, 3A to 3B may include the wearable device 101 of FIGS. 11A to 11B. The operation of the wearable device 101 described with reference to FIGS. 11A and 11B may be performed by the wearable device 101 and/or the processor 210 of FIG. 2.

Referring to FIG. 11A, a screen 1110 displayed by the wearable device 101 identifying a real light source is exemplarily illustrated. The wearable device 101 may display a virtual light source 1120 corresponding to the real light source on the screen 1110. A position P2 of the virtual light source 1120 in the virtual space 140 may correspond to a position of the real light source with respect to the wearable device 101 in the external space including the wearable device 101. The wearable device 101 may perform rendering with respect to at least one virtual object included in the virtual space 140 based on the virtual light source 1120. For example, the wearable device 101 may perform rendering with respect to a virtual object 1130 based on virtual light outputted from the virtual light source 1120. Referring to FIG. 11A, the wearable device 101 may display a visual object 1132 representing a shadow extended from the virtual object 1130 on the screen 1110 by performing rendering with respect to the virtual object 1130.

Referring to FIG. 11A, the wearable device 101 according to an embodiment may determine whether to apply a visual effect based on the virtual light source 1120 to a virtual object, based on at least one of a position P1 of the wearable device 101 in the virtual space 140, a distance between the position P1 and the virtual object, a category of the virtual object, or a position relationship between the virtual light source 1120 and the virtual object. For example, the wearable device 101 may refrain from applying the visual effect based on the virtual light source 1120 with respect to a virtual object 1140 that supports a function of interacting with a user 110 wearing the wearable device 101.

In an embodiment, the wearable device 101 that performs rendering with respect to the virtual object 1140, which is included in a region spaced apart from the position P1 of the wearable device 101 in the virtual space 140 to be less than or equal to a preset distance, and included in a preset category for interaction, may refrain from applying the visual effect based on the virtual light source 1120 to the virtual object 1140. The preset distance may include a reachable distance (e.g., about 50 cm) of a hand of the user 110 of the wearable device 101, in the external space. The wearable device 101 according to an embodiment may perform rendering with respect to another virtual object (e.g., the virtual object 1130) spaced apart from the region, based on the virtual light source 1120.

In an embodiment, the virtual object 1140 that supports the function of interacting with the user 110 may be highly likely to be disposed toward the position P1 of the wearable device 101 in the virtual space 140. In a case that the wearable device 101 combines a shadow formed by a virtual light source (e.g., the virtual light source 1120) disposed beyond the virtual object 1140 with respect to the position P1 to the virtual object 1140 disposed toward the position P1, the shadow may be extended toward the position P1. For example, a probability that the user 110 wearing the wearable device 101 recognizes the virtual object 1140 may be reduced by the shadow. The wearable device 101 according to an embodiment may cease applying the visual effect based on the virtual light source 1120 to the virtual object 1140 that supports the function, based on a category (e.g., a preset category for classifying a virtual object and/or a visual object for interaction) of the virtual object.

In an embodiment, applying the visual effect associated with the virtual light source 1120 may be ceased based on whether the virtual object 1140 is floating in the virtual space 140. For example, the wearable device 101 may cease applying the visual effect based on the virtual light source 1120 to the virtual object 1140 floating in the virtual space 140. The virtual object 1140 floating in the virtual space 140 may mean having a fixed position and/or coordinate within the virtual space 140. For example, the virtual object 1140 may have a position that is not linked with another virtual object and/or a real object mapped to the virtual space 140, within the virtual space 140. The virtual object 1140 floating in the virtual space 140 may include a window (or an activity) provided from an application executed by the wearable device 101. In a state of displaying the virtual object 1140 corresponding to the window provided from the application, the wearable device 101 may limit and/or cease applying the visual effect based on the virtual light source 1120 to the virtual object 1140 in order to maintain visibility of information included in the virtual object 1140.

In an embodiment, applying the visual effect associated with the virtual light source 1120 may be ceased based on a position and/or a category of a virtual object. For example, the wearable device 101 may apply the visual effect based on the virtual light source 1120, to a virtual object (e.g., a virtual object 1150) disposed on a reference plane 1155 (e.g., a plane in which a z-axis coordinate is 0) of the virtual space 140. Applying the visual effect to the virtual object disposed on the reference plane 1155 may be performed independently of the distance between the position P1 of the wearable device 101 and the virtual object in the virtual space 140. For example, the wearable device 101 may apply the visual effect to the virtual object even though the distance between the virtual object and the position P1 disposed on the reference plane 1155 is less than the preset distance to cease the visual effect based on the virtual light source 1120. For example, with respect to a virtual object (e.g., the virtual object 1140) displayed to interact with the user 110, such as a window, a widget, and/or an icon provided from the application, the wearable device 101 may not apply the visual effect based on the virtual light source 1120.

In an embodiment, in a case that a distance between a reference position P3 of the virtual object 1150 and the position P1 of the wearable device 101 in the virtual space 140 is less than or equal to the preset distance, the wearable device 101 may cease applying the visual effect based on the virtual light source 1120 to the virtual object 1150. For example, with respect to the virtual object 1150 displayed relatively close to the user 110 wearing the wearable device 101, the wearable device 101 may cease to perform rendering with respect to the virtual object 1150 based on the virtual light source 1120, in order to prevent a shadow extended from the virtual object 1150 from darkening the screen 1110. For example, the wearable device 101 may cease performing ray casting with respect to a ray that is radiated from the virtual light source 1120 and faces the virtual object 1150. For example, the wearable device 101 may display the visual object 1132 representing a shadow formed by the virtual object 1130 based on the ray casting. The ray casting may include an algorithm for rendering the virtual space 140 that includes virtual light, by tracking a trajectory (e.g., a trajectory of virtual light reflected from a surface of the virtual object) of the virtual light propagating in the virtual space 140.

As described above, the wearable device 101 according to an embodiment may identify a first region of the virtual space 140 linked with the virtual light source 1120 corresponding to the real light source. The first region may include a portion of the virtual space 140 that exceeds the preset distance from the position P1 in the virtual space 140 of the wearable device 101. In a state of displaying a virtual space distinguished from the external space, the wearable device 101 may perform rendering with respect to a first virtual object (e.g., the virtual object 1130) included in the first region among a plurality of virtual objects 1130, 1140, and 1150 included in the virtual space 140, on the display based on a visual effect associated with the virtual light source.

The wearable device 101 according to an embodiment may perform rendering with respect to a second virtual object (e.g., the virtual objects 1140 and 1150) included in a second region different from the first region among the plurality of virtual objects 1130, 1140, and 1150, on the display independently of the visual effect. For example, the wearable device 101 may refrain from applying the visual effect based on the virtual light source 1120 to the virtual object 1150 included in the second region. In an embodiment, the wearable device 101 may perform rendering with respect to a virtual object (e.g., the virtual object 1140) that is included in the second region and included in the category for interaction with the user 110, independently of the virtual light source 1120. Based on a virtual object disposed relatively close to the position P1 of the wearable device 101 in the virtual space 140 and/or a type of the virtual object, the wearable device 101 may determine whether to apply the visual effect based on the virtual light source 1120 to the virtual object. For example, on the screen 1110 seen by the user wearing the wearable device 101, in order to prevent a shadow caused by the virtual light source 1120 from reducing visibility with respect to the virtual objects 1130, 1140, and 1150, the wearable device 101 may perform rendering with respect to the virtual object included in the second region independently of the visual effect.

The wearable device 101 according to an embodiment may change one or more parameters used for the visual effect based on the virtual light source 1120 according to an input received from the user 110. Referring to FIG. 11B, according to an embodiment, a virtual object 1170 displayed by the wearable device 101 is exemplarily illustrated to adjust the one or more parameters. Although the virtual object 1170 in a shape of a pop-up window is illustrated, an embodiment is not limited thereto. In terms of setting the one or more parameters, the virtual object 1170 may be referred to as a setting window. Referring to FIG. 11B, for convenience of description, the virtual object 1170 is illustrated outside a region of a sheet in which the screen 1110 is illustrated. The wearable device 101 according to an embodiment may display the virtual object 1170 in the virtual space 140 and/or the screen 1110.

The wearable device 101 according to an embodiment displaying the virtual object 1170 may be performed based on identifying a gesture of the user 110. For example, based on identifying a direction of a gaze of the user 110 toward the virtual light source 1120 in the screen 1110 by exceeding a preset period, the wearable device 101 may display the virtual object 1170. For example, based on a hand gesture of the user 110 associated with the virtual light source 1120, the wearable device 101 may display the virtual object 1170. The hand gesture may include a pinch gesture performed by a contact of fingertips of two fingers of the user 110 adjacent to the virtual light source 1120 and/or a pointing gesture performed by one or more preset fingers (e.g., an index finger) straightened toward the virtual light source 1120. Similarly, in an embodiment of displaying a virtual object 1160 having a shape of a button displayed at a preset position on the screen 1110, the wearable device 101 may display the virtual object 1170 based on a gesture of the user 110 selecting the virtual object 1160. The virtual object 1160 may include an icon indicating adjustment of the one or more parameters associated with the virtual light source 1120. An embodiment is not limited thereto, and the wearable device 101 may display the virtual object 1170 based on a remark (e.g., a natural language sentence such as "I want to change the virtual light source") associated with the virtual object 1170.

The wearable device 101 according to an embodiment may provide options for adjusting the visual effect (or rendering) associated with the virtual light source 1120 through the virtual object 1170. Based on the options, the wearable device 101 may change the one or more parameters used for the visual effect based on the virtual light source 1120. Referring to FIG. 11B, the wearable device 101 may display a visual object 1171 for adjusting whether to dispose the virtual light source 1120 in the virtual space 140 based on a real light source in the external space within the virtual object 1170. Referring to FIG. 11B, the visual object 1171 having a shape of a switch is exemplarily illustrated, but an embodiment is not limited thereto. For example, the wearable device 101 may identify an input for adjusting whether to generate a virtual light source corresponding to the real light source using a visual object having a shape of a radio button. The wearable device 101 may toggle to dispose the virtual light source 1120 in the virtual space 140 based on a position, color, and/or brightness of the real light source by using an input associated with the visual object 1171.

Referring to FIG. 11B, the wearable device 101 may provide options associated with a region for limiting the visual effect based on the virtual light source 1120 in the virtual object 1170. For example, the wearable device 101 may display a visual object 1172 for adjusting whether to generate the region within the virtual object 1170. Although the visual object 1172 having a shape of a switch is exemplarily illustrated, an embodiment is not limited thereto, and the wearable device 101 may display a visual object having a shape of a radio button. In an exemplary state of FIG. 11B of identifying an input for generating the region based on the visual object 1172, the wearable device 101 may identify an input for adjusting a size and/or a reference position of the region by using visual objects 1173, 1174, and 1175 displayed on the virtual object 1170.

The wearable device 101 according to an embodiment may identify the input for adjusting the size of the region for limiting the visual effect based on the virtual light source 1120 through the visual object 1173 having a shape of a slider. The wearable device 101 may display, on the visual object 1173 having a shape of a line extended in a reference direction (e.g., a horizontal direction), the handle 1174 movable on the line by a direction of a gaze and/or a hand gesture (e.g., a pinch gesture) of the user 110. Based on a position of the handle 1174 superimposed on the visual object 1173, the wearable device 101 may change the size of the region.

The wearable device 101 according to an embodiment may identify the input for adjusting the reference position of the region for limiting the visual effect based on the virtual light source 1120 through the visual object 1175 having a shape of a button. Based on an input indicating selection of the visual object 1175, the wearable device 101 may provide options with respect to the reference position in a shape of a pop-up window and/or a list. For example, the wearable device 101 may provide a first option for forming the region based on the position P1 in the virtual space 140 of the wearable device 101 and/or a second option for forming the region based on a fixed position in the virtual space 140. Based on an input for selecting the first option, the wearable device 101 may display text (e.g., "user") indicating that the position P1 is selected as the reference position, on the visual object 1175. Based on an input for selecting the second option, the wearable device 101 may display text (e.g., "fixed position") indicating that the region is formed based on the fixed position, on the visual object 1175. In a state in which the second option is selected, the wearable device 101 may form a region centered at the fixed position (e.g., the reference position on a z-axis) in the virtual space 140 and cease applying the visual effect based on the virtual light source 1120 with respect to the virtual object included in the region.

The wearable device 101 according to an embodiment may generate the region in which the application of the visual effect associated with the virtual light source 1120 is limited, in the virtual space 140, by using the size set based on the visual object 1173 and the reference position set based on the visual object 1175. In an exemplary state of FIG. 11B, the wearable device 101 may generate a region that has a size set by the position of the handle 1174 on the visual object 1173 and is centered at the position P1 in the virtual space 140 of the wearable device 101 set by the visual object 1175. The wearable device 101 may apply the visual effect based on the virtual light source 1120 to another virtual object different from at least one virtual object included in the region among the virtual objects 1130, 1140, and 1150 included in the virtual space 140.

The wearable device 101 according to an embodiment may identify an input for adjusting a parameter associated with a shadow (e.g., the visual object 1132) displayed by the visual effect based on the virtual light source 1120 within the virtual object 1170. The parameter may include a size, color, and/or opacity of the shadow. In an embodiment of FIG. 11B, the wearable device 101 may display, within the virtual object 1170, a visual object 1176 that is associated with the size of the shadow and has a shape of a slider. The wearable device 101 may identify an input for adjusting the size of the shadow through a handle 1177 displayed on the visual object 1176. In an embodiment of FIG. 11B, the wearable device 101 may display, within the virtual object 1170, a visual object 1178 that is associated with the opacity of the shadow and has a shape of a slider. The wearable device 101 may identify an input for adjusting the opacity of the shadow through a handle 1179 displayed on the visual object 1178.

The wearable device 101 according to an embodiment may perform rendering with respect to the shadow of the virtual object based on the size set based on the visual object 1176 and the opacity set based on the visual object 1178. In an exemplary state of FIG. 11B, a size of the visual object 1132 representing the shadow extended from the virtual light source 1120 toward the virtual object 1130 may be associated with a position of the handle 1177 on the visual object 1176. The wearable device 101 may change the opacity of the visual object 1132 based on a position of the handle 1179 on the visual object 1178.

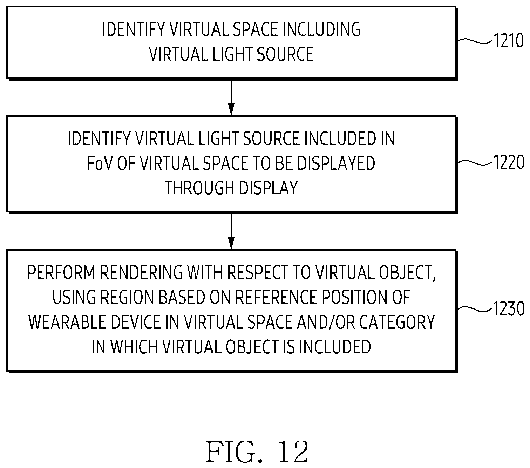

Hereinafter, the operation of the wearable device 101 described with reference to FIGS. 11A to 11B will be described with reference to FIG. 12.

FIG. 12 illustrates an example of a flowchart of a wearable device according to an embodiment. The wearable device of FIGS. 1A to 1B, 2, 3A to 3B may include the wearable device of FIG. 12. An operation of the wearable device described with reference to FIG. 12 may be performed by the wearable device 101 and/or the processor 210 of FIG. 2.

In the following embodiment, each operation may be performed sequentially, but is not necessarily performed sequentially. For example, an order of each operation may be changed, and at least two operations may be performed in parallel.

Referring to FIG. 12, in operation 1210, the wearable device according to an embodiment may identify a virtual space including a virtual light source. The virtual light source of operation 1210 may include the virtual light source 150 of FIGS. 1A to 1B, the virtual light sources 1031 and 1032, and/or the virtual light source 1120 of FIGS. 11A to 11B. The virtual space of operation 1210 may include the virtual space 140 of FIGS. 1A and/or 11A to 11B. The wearable device according to an embodiment may perform operation 1210 based on execution of the virtual space manager 276 of FIG. 2. The wearable device may identify the virtual space in which the virtual light source corresponding to a real light source is disposed based on information including a result of identifying the real light source from an external space.

Referring to FIG. 12, in operation 1220, the wearable device according to an embodiment may identify the virtual light source included in a FoV of the virtual space to be displayed through a display. The FoV of operation 1220 may include the FoV of FIGS. 1A to 1B. For example, the wearable device may select the FoV in the virtual space based on a position and/or a direction of the wearable device. In a state of disposing at least one virtual light source corresponding to at least one real light source included in the external space, in the virtual space, the wearable device may identify the at least one virtual light source included in the FoV. The wearable device according to an embodiment may perform operation 1230 based on identifying the at least one virtual light source from FoV by operation 1220.

Referring to FIG. 12, in operation 1230, the wearable device according to an embodiment may perform rendering with respect to a virtual object, using a region based on a reference position of the wearable device in the virtual space and/or a category in which the virtual object is included. For example, the wearable device may apply a visual effect associated with the virtual light source of operation 1220 to a virtual object included in a region spaced apart from the reference position of the wearable device in the virtual space by a preset distance or more. The wearable device may refrain from applying the visual effect associated with the virtual light source of operation 1220 to a virtual object spaced apart from the reference position by the preset distance or less. For example, the wearable device may apply the visual effect associated with the virtual light source of operation 1220 to a visual object different from a preset category for interaction with a user (e.g., the user 110 of FIGS. 1A to 1B). The wearable device may apply the visual effect associated with the virtual light source of operation 1220 to the virtual object included in the preset category. An exemplary operation to which the visual effect associated with the virtual light source is applied based on a distance between the reference position and the virtual object, and/or a type of the virtual object has been described, but an embodiment is not limited thereto.

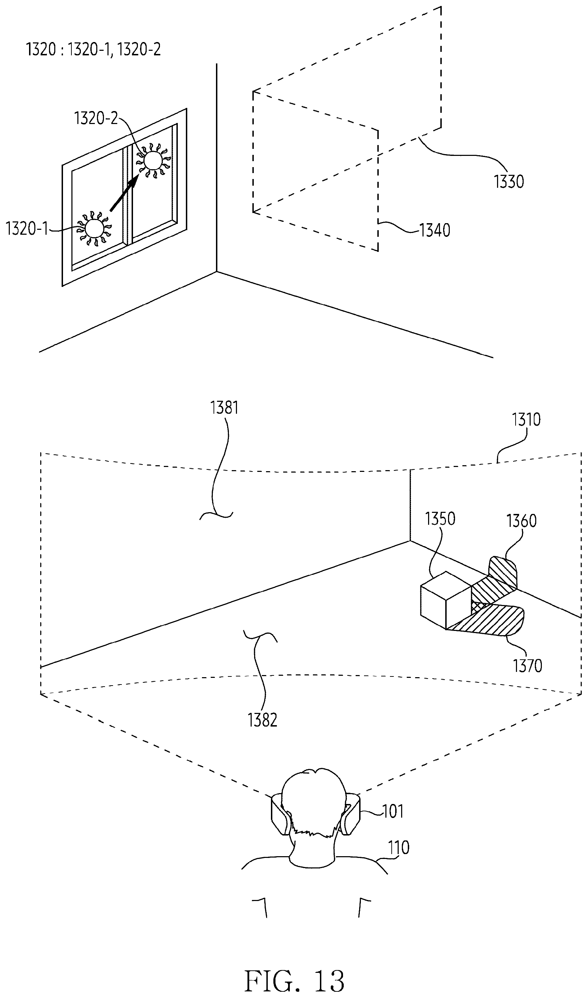

In an embodiment, the real light source identified by the wearable device may include a real light source (e.g., the sun and/or the moon) that is regularly moved. Hereinafter, an operation of the wearable device associated with a virtual light source moving in a virtual space based on the regularity of the real light source will be described with reference to FIG. 13.

FIG. 13 illustrates an example of an operation of a wearable device 101 that performs rendering with respect to a virtual space based on a movement of a real light source 1320. The wearable device of FIGS. 1A to 1B, 2, 3A to 3B may include the wearable device 101 of FIG. 13. The operation of the wearable device 101 described with reference to FIG. 13 may be performed by the wearable device 101 and/or the processor 210 of FIG. 2.

Referring to FIG. 13, an exemplary state of the wearable device 101 identifying an external space including a sun 1320, which is an example of a real light source, is illustrated. The wearable device 101 according to an embodiment may identify the sun 1320 from an image and/or a video of the external space, based on image recognition and/or object recognition. Based on identifying the sun 1320, the wearable device 101 may generate and/or store information for disposing a virtual light source corresponding to the sun 1320 in a virtual space (e.g., the virtual space 140 of FIG. 1A). The wearable device 101 may store, in the information, one or more parameters for moving the virtual light source in the virtual space based on a movement of the sun 1320 in the external space. The wearable device 101 may store, in the information, one or more parameters for changing brightness and/or color of the virtual light source in the virtual space based on a change in brightness and/or color of the sun 1320 over time.

For example, within a time interval (e.g., a time interval including sunset time or having sunset time as a boundary) associated with sunset time, the wearable device 101 may display a virtual space based on a red and/or yellow virtual light source and/or light emitted from the virtual light source. For example, within another time interval (e.g., a time interval before the time interval, or before sunset) different from the time interval, the wearable device 101 may display a virtual light source with white color and/or a virtual space based on the white color.

Referring to FIG. 13, the wearable device 101 identifying the sun 1320, which is the real light source, in the external space may display a screen 1310 representing at least a portion of the virtual space in response to an input for switching to a VR mode. Based on displaying the screen 1310, the wearable device 101 may cease displaying the at least a portion of the external space to a user 110 wearing the wearable device 101. Referring to FIG. 13, the wearable device 101 may perform rendering with respect to the virtual space using the virtual light source based on the sun 1320, which is the real light source.

The wearable device 101 according to an embodiment may perform rendering with respect to the virtual space including the virtual light source corresponding to the real light source based on a movement path (e.g., a movement path of the sun 1320) of the real light source. Referring to FIG. 13, a sun 1320-1 at a first position at a first moment and a sun 1320-2 at a second position at a second moment after the first moment are illustrated. It is assumed that a first portion 1330 formed on a wall surface of the external space is a portion from which light emitted from the sun 1320-1 at the first position is reflected. It is assumed that a second portion 1340 formed on the wall surface of the external space is a portion from which light emitted from the sun 1320-2 at the second position is reflected.

In an exemplary case of FIG. 13, the wearable device 101 according to an embodiment may perform rendering with respect to a virtual object 1350 based on a virtual light source of the virtual space corresponding to the sun 1320-1 at the first position at the first moment. Based on virtual light from the virtual light source corresponding to the sun 1320-1 at the first position toward the virtual object 1350, the wearable device 101 may display a first visual object 1360 representing a shadow of the virtual object 1350 on the screen 1310. A position of the virtual light source in the virtual space may correspond to the first position in the external space. Similarly, at the second moment after the first moment, the wearable device 101 may display a visual object 1370 representing a shadow of the virtual object 1350 based on a virtual light source of the virtual space corresponding to the sun 1320-2 at the second position. At another moment between the first moment and the moment, the wearable device 101 may visualize the shadow of the virtual object 1350 using a visual object in an intermediate form of the visual objects 1360 and 1370.

In an exemplary case of FIG. 13, the wearable device 101 may adjust color, brightness, and/or a pattern of planes 1381 and 1382 of the virtual space based on a brightness distribution and/or a color distribution in an image of the external space. Referring to FIG. 13, at the first moment, based on identifying the portion 1330 having a relatively large size in the image, the wearable device 101 may display the plane 1381 based on first brightness. At the second moment after the first moment, based on identifying the portion 1340 having a relatively small size, the wearable device 101 may display the plane 1381 based on second brightness less than the first brightness.

As described above, the wearable device 101 according to an embodiment may apply a color sense of the external space including the wearable device 101 to the virtual space by using the virtual light source corresponding to the real light source. For example, the wearable device 101 may apply a weather condition included in the external space to the virtual space, such as the sun 1320. For example, the wearable device 101 may dispose a virtual light source having color, brightness, and/or intensity corresponding to weather information based on the position of the wearable device 101 in the virtual space. By using the virtual light source, the wearable device 101 may provide the user 110 with user experience based on connectivity between a VST mode and the VR mode.

For example, the wearable device 101 may apply a visual effect based on the virtual light source using colors and/or shapes corresponding to snowy weather, rainy weather, and sunny weather, respectively. For example, in a case of the snowy weather, the wearable device 101 may perform rendering with respect to the virtual space by using a virtual light source of the first brightness that has gray color. For example, in a case of the sunny weather, the wearable device 101 may perform rendering with respect to the virtual space by using a virtual light source of the second brightness exceeding the first brightness that has a white color (or a color of a light source corresponding to a current time). For example, in a case of the rainy weather, the wearable device 101 may perform rendering with respect to the virtual space by using a virtual light source having color that changes to represent a weather phenomenon such as lightning.

Information on weather and/or time may be obtained based on a software application (e.g., a weather application to obtain weather information and/or a time application to provide a time-related function) executed by the wearable device 101. The wearable device 101 obtaining the information may load or obtain a visual effect corresponding to weather and/or time indicated by the information. The wearable device 101 may display a virtual space to which the loaded visual effect is applied.

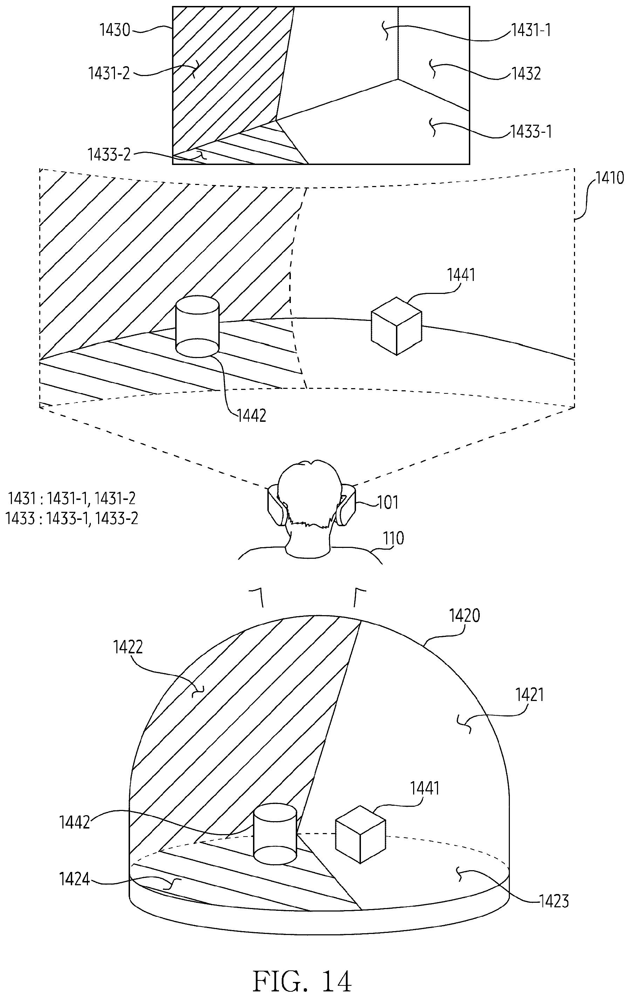

Instead of a virtual light source, the wearable device 101 according to an embodiment may apply the brightness distribution and/or the color distribution of the image in the external space to the virtual space using a texture and/or a pattern applied to a surface of the virtual space. Hereinafter, an embodiment of the wearable device 101 for changing the texture and/or the pattern will be described with reference to FIG. 14.

FIG. 14 illustrates an example of an operation of a wearable device 101 that performs rendering with respect to a virtual space 1402 based on a brightness distribution of an external space. The wearable device of FIGS. 1A to 1B, 2, 3A to 3B may include the wearable device 101 of FIG. 14. The operation of the wearable device 101 described with reference to FIG. 14 may be performed by the wearable device 101 and/or the processor 210 of FIG. 2.

Referring to FIG. 14, the wearable device 101 according to an embodiment may display a screen 1410 representing at least a portion of a virtual space 1420 by performing rendering with respect to the virtual space 1420 having a shape of a hemisphere. A shape of the virtual space 1420 is not limited to the shape of the hemisphere illustrated in FIG. 14. The wearable device 101 may visualize a background of the screen 1410 using a curved surface having the shape of the hemisphere in the virtual space 1420. For example, the wearable device 101 may visualize the background using a texture and/or a pattern of the curved surface. In an embodiment, the curved surface may be referred to as a boundary surface of the virtual space 1420.

The wearable device 101 according to an embodiment may obtain an image 1430 with respect to the external space using a camera (e.g., the camera 225 of FIG. 2). The wearable device 101 may perform rendering the boundary surface of the virtual space 1420 based on a brightness distribution of the image 1430. Referring to FIG. 14, the wearable device 101 facing three wall surfaces may identify portions 1431, 1432, and 1433 corresponding to each of the wall surfaces from the image 1430. Based on the brightness distribution of the image 1430, the wearable device 101 may identify portions 1431-2 and 1433-2 having relatively dark brightness and portions 1431-1, 1432, and 1433-1 having relatively bright brightness. The wearable device 101 may store information indicating the brightness distribution of the image 1430 in memory (e.g., the memory 215 of FIG. 2). The wearable device 101 may apply a texture and/or a pattern representing the brightness distribution to the boundary surface of the virtual space 1420, based on the information. For example, the wearable device 101 may apply a gradation pattern based on the brightness distribution to the boundary surface.

Referring to FIG. 14, the wearable device 101 according to an embodiment may change brightness and/or color of the boundary surface of the virtual space 1420 based on the brightness distribution of the image 1430. For example, the wearable device 101 may set brightness of a portion 1422 of the boundary surface corresponding to the portion 1431-2 of the image 1430 having relatively dark brightness to first brightness, and may set brightness of a portion 1421 of the boundary surface corresponding to the portion 1431-1 of the image 1430 having relatively bright brightness to second brightness exceeding the first brightness. Similarly, the wearable device 101 may set a portion 1424 of the boundary surface corresponding to the portion 1433-2 of the image 1430 to the first brightness, and may set a portion 1423 of the boundary surface corresponding to the portion 1433-1 of the image 1430 to the second brightness. Based on rendering with respect to the virtual space 1420 including the boundary surface, the wearable device 101 may display the portion 1422 having the first brightness and the portion 1421 having the second brightness on the screen 1410.

In an embodiment, the wearable device 101 may perform rendering with respect to virtual objects 1441 and 1442 included in the virtual space 1420, based on a brightness distribution at the boundary surface of the virtual space 1420. For example, the wearable device 101 may perform rendering with respect to the virtual object 1442 adjacent to the portions 1422 and 1424 of the boundary surfaced set to the first brightness, based on the first brightness. The wearable device 101 may perform rendering with respect to the virtual object 1441 adjacent to the portions 1421 and 1423 of the boundary surface set to the second brightness, based on the second brightness. In an exemplary state in which the second brightness exceeds the first brightness, the virtual object 1441 displayed on the screen 1410 may be displayed based on brightness exceeding the brightness of the virtual object 1442.

As described above, the wearable device 101 according to an embodiment may apply the brightness distribution identified from the image 1430 with respect to the external space to a surface (e.g., the boundary surface) of the virtual space 1420. The wearable device 101 may provide continuous user experience with respect toa color sense of the external space between a VST mode and a VR mode, by applying the brightness distribution to the virtual space. Although an operation of the wearable device 101 providing the virtual space 1420 based on a real light source using a texture and/or a pattern has been exemplarily described, an embodiment is not limited thereto. The wearable device 101 according to an embodiment may identify brightness, color, and/or illuminance of the real light source based on information associated with the real light source identified from the image 1430. The wearable device 101 may perform rendering with respect to the virtual space 1420 based on the brightness, the color, and/or the illuminance. For example, the wearable device 101 may perform rendering with respect to the virtual space 1420 and/or one or more virtual objects (e.g., the virtual objects 1441 and 1442) included in the virtual space 1420, based on the brightness, the color, and/or the illuminance. Since the wearable device 101 renders the virtual space 1420 using the real light source identified from the image 1430, the wearable device 101 may provide a user with the virtual space 1420 in which the brightness, the color, and/or the illuminance of the real light source is at least partially maintained.

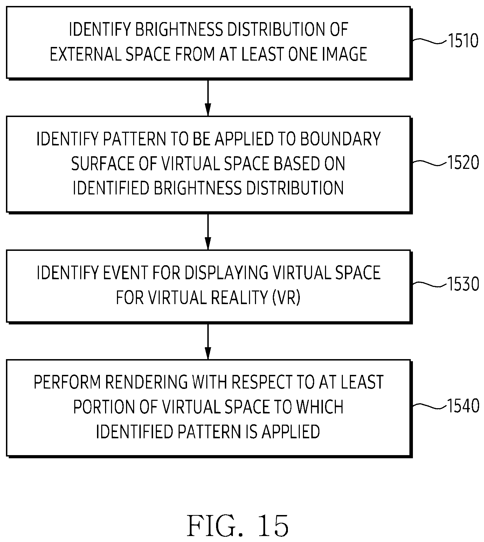

Hereinafter, the operation of the wearable device 101 described with reference to FIG. 14 will be described with reference to FIG. 15.

FIG. 15 illustrates an example of a flowchart of a wearable device according to an embodiment. The wearable device of FIGS. 1A to 1B, 2, 3A to 3B may include the wearable device of FIG. 15. An operation of the wearable device 101 described with reference to FIG. 15 may be performed by the wearable device 101 and/or the processor 210 of FIG. 2.

In the following embodiment, each operation may be performed sequentially, but is not necessarily performed sequentially. For example, an order of each operation may be changed, and at least two operations may be performed in parallel.

Referring to FIG. 15, in operation 1510, the wearable device according to an embodiment may identify a brightness distribution of an external space from at least one image. The at least one image of operation 1510 may include the image 1430 of FIG. 14. The wearable device according to an embodiment may perform operation 1510 based on a brightness distribution and/or a color distribution of pixels included in an image obtained through a camera (e.g., the camera 225 of FIG. 2).

Referring to FIG. 15, in operation 1520, the wearable device according to an embodiment may identify a pattern to be applied to a boundary surface of a virtual space based on the identified brightness distribution. The pattern of operation 1520 may be referred to as a texture of the boundary surface. The wearable device may identify a pattern having a brightness distribution corresponding to the brightness distribution. The wearable device according to an embodiment may store the pattern identified based on operation 1520 in memory (e.g., the memory 215 of FIG. 2).

Referring to FIG. 15, in operation 1530, the wearable device according to an embodiment may identify an event for displaying the virtual space for virtual reality (VR). The wearable device may perform operation 1530 of FIG. 15, similar to operation 330 of FIG. 3A, operation 530 of FIG. 5, operation 630 of FIG. 6, operation 730 of FIG. 7, and/or operation 930 of FIG. 9. In response to the event, the wearable device may perform operation 1540.

Referring to FIG. 15, in operation 1540, the wearable device according to an embodiment may perform rendering with respect to at least a portion of the virtual space to which the identified pattern is applied. In an embodiment, an interface of the virtual space to which the pattern of operation 1520 to be applied may have a shape surrounding an inner space of the virtual space. For example, the pattern may be recognized as a background in the at least a portion of the virtual space rendered by operation 1540. The screen 1410 of FIG. 14 may correspond to the at least a portion of the virtual space rendered by operation 1540.

As described above, the wearable device according to an embodiment may dispose a virtual light source corresponding to a real light source in the virtual space, in order to continuously provide user experience based on the real light source between a VST mode and a VR mode. The wearable device may apply a visual effect based on the virtual light source to at least one virtual object disposed in the virtual space. The wearable device applying the visual effect to the virtual object may be conditionally performed by a position of the virtual object in the virtual space and/or a category of the virtual object. For example, the wearable device may refrain from applying the visual effect to a virtual object disposed adjacent to the wearable device in the virtual space and/or to interact with a user wearing the wearable device.

Hereinafter, an example of a form factor of the wearable device 101 according to an embodiment will be described with reference to FIGS. 16A to 16B and/or FIGS. 17A to 17B.

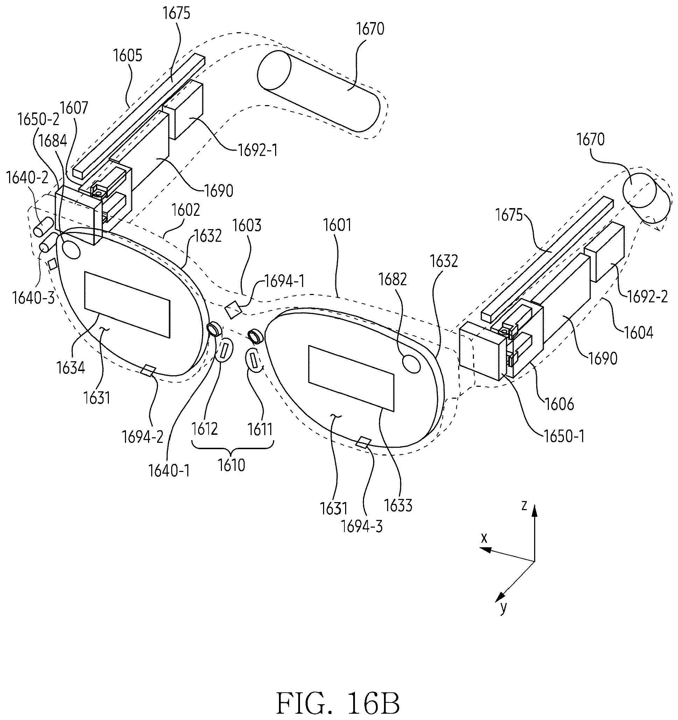

FIG. 16A illustrates an example of a perspective view of a wearable device according to an embodiment. FIG. 16B illustrates an example of one or more hardware disposed in a wearable device 1600 according to an embodiment. The wearable device 101 of FIGS. 1A to 1B and 2 may include the wearable device 1600 of FIGS. 16A to 16B. As shown in FIG. 16A, the wearable device 1600 according to an embodiment may include at least one display 1650 and a frame supporting the at least one display 1650.

According to an embodiment, the wearable device 1600 may be wearable on a portion of the user's body. The wearable device 1600 may provide augmented reality (AR), virtual reality (VR), or mixed reality (MR) combining the augmented reality and the virtual reality to a user wearing the wearable device 1600. For example, the wearable device 1600 may output a virtual reality image to a user through the at least one display 1650, in response to a user's preset gesture obtained through a motion recognition camera 1640-2 of FIG. 16B.

According to an embodiment, the at least one display 1650 included in the wearable device 1600 may provide visual information to a user. The at least one display 1650 may include the display 220 of FIG. 2. For example, the at least one display 1650 may include a transparent or translucent lens. The at least one display 1650 may include a first display 1650-1 and/or a second display 1650-2 spaced apart from the first display 1650-1. For example, the first display 1650-1 and the second display 1650-2 may be disposed at positions corresponding to the user's left and right eyes, respectively.

Referring to FIG. 16B, the at least one display 1650 may form a display area on the lens to provide a user wearing the wearable device 1600 with visual information included in ambient light passing through the lens and other visual information distinct from the visual information. The lens may be formed based on at least one of a fresnel lens, a pancake lens, or a multi-channel lens. The display area formed by the at least one display 1650 may be formed on the second surface 1632 of the first surface 1631 and the second surface 1632 of the lens. When the user wears the wearable device 1600, ambient light may be transmitted to the user by being incident on the first surface 1631 and being penetrated through the second surface 1632. For another example, the at least one display 1650 may display a virtual reality image to be coupled with a reality screen transmitted through ambient light. The virtual reality image outputted from the at least one display 1650 may be transmitted to eyes of the user, through one or more hardware (e.g., optical devices 1682 and 1684, and/or at least one waveguides 1633 and 1634) included in the wearable device 1600.

According to an embodiment, the wearable device 1600 may include waveguides 1633 and 1634 that transmit light transmitted from the at least one display 1650 and relayed by the at least one optical device 1682 and 1684 by diffracting to the user. The waveguides 1633 and 1634 may be formed based on at least one of glass, plastic, or polymer. A nano pattern may be formed on at least a portion of the outside or inside of the waveguides 1633 and 1634. The nano pattern may be formed based on a grating structure having a polygonal or curved shape. Light incident to an end of the waveguides 1633 and 1634 may be propagated to another end of the waveguides 1633 and 1634 by the nano pattern. The waveguides 1633 and 1634 may include at least one of at least one diffraction element (e.g., a diffractive optical element (DOE), a holographic optical element (HOE)), and a reflection element (e.g., a reflection mirror). For example, the waveguides 1633 and 1634 may be disposed in the wearable device 1600 to guide a screen displayed by the at least one display 1650 to the user's eyes. For example, the screen may be transmitted to the user's eyes through total internal reflection (TIR) generated in the waveguides 1633 and 1634.

According to an embodiment, the wearable device 1600 may analyze an object included in a real image collected through a photographing camera 1640-1, combine with a virtual object corresponding to an object that become a subject of augmented reality provision among the analyzed object, and display on the at least one display 1650. The virtual object may include at least one of text and images for various information associated with the object included in the real image. The wearable device 1600 may analyze the object based on a multi-camera such as a stereo camera. For the object analysis, the wearable device 1600 may execute time-of-flight (ToF) and/or simultaneous localization and mapping (SLAM) supported by the multi-camera. The user wearing the wearable device 1600 may watch an image displayed on the at least one display 1650.

According to an embodiment, a frame may be configured with a physical structure in which the wearable device 1600 may be worn on the user's body. According to an embodiment, the frame may be configured so that when the user wears the wearable device 1600, the first display 1650-1 and the second display 1650-2 may be positioned corresponding to the user's left and right eyes. The frame may support the at least one display 1650. For example, the frame may support the first display 1650-1 and the second display 1650-2 to be positioned at positions corresponding to the user's left and right eyes.

Referring to FIG. 16A, according to an embodiment, the frame may include an area 1620 at least partially in contact with the portion of the user's body in case that the user wears the wearable device 1600. For example, the area 1620 of the frame in contact with the portion of the user's body may include an area in contact with a portion of the user's nose, a portion of the user's ear, and a portion of the side of the user's face that the wearable device 1600 contacts. According to an embodiment, the frame may include a nose pad 1610 that is contacted on the portion of the user's body. When the wearable device 1600 is worn by the user, the nose pad 1610 may be contacted on the portion of the user's nose. The frame may include a first temple 1604 and a second temple 1605, which are contacted on another portion of the user's body that is distinct from the portion of the user's body.

According to an embodiment, the frame may include a first rim 1601 surrounding at least a portion of the first display 1650-1, a second rim 1602 surrounding at least a portion of the second display 1650-2, a bridge 1603 disposed between the first rim 1601 and the second rim 1602, a first pad 1611 disposed along a portion of the edge of the first rim 1601 from one end of the bridge 1603, a second pad 1612 disposed along a portion of the edge of the second rim 1602 from the other end of the bridge 1603, the first temple 1604 extending from the first rim 1601 and fixed to a portion of the wearer's ear, and the second temple 1605 extending from the second rim 1602 and fixed to a portion of the ear opposite to the ear. The first pad 1611 and the second pad 1612 may be in contact with the portion of the user's nose, and the first temple 1604 and the second temple 1605 may be in contact with a portion of the user's face and the portion of the user's ear. The temples 1604 and 1605 may be rotatably connected to the rim through hinge units 1606 and 1607 of FIG. 16B. The first temple 1604 may be rotatably connected with respect to the first rim 1601 through the first hinge unit 1606 disposed between the first rim 1601 and the first temple 1604. The second temple 1605 may be rotatably connected with respect to the second rim 1602 through the second hinge unit 1607 disposed between the second rim 1602 and the second temple 1605. According to an embodiment, the wearable device 1600 may identify an external object (e.g., a user's fingertip) touching the frame and/or a gesture performed by the external object by using a touch sensor, a grip sensor, and/or a proximity sensor formed on at least a portion of the surface of the frame.

According to an embodiment, the wearable device 1600 may include hardware (e.g., hardware described above based on the block diagram of FIG. 2) that performs various functions. For example, the hardware may include a battery module 1670, an antenna module 1675, optical devices 1682 and 1684, speakers 1692-1 and 1692-2, microphones 1694-1, 1694-2, and 1694-3, a depth sensor module (not illustrated), and/or a printed circuit board (PCB) 1690. Various hardware may be disposed in the frame.

According to an embodiment, the microphones 1694-1, 1694-2, and 1694-3 of the wearable device 1600 may obtain a sound signal, by being disposed on at least a portion of the frame. The first microphone 1694-1 disposed on the nose pad 1610, the second microphone 1694-2 disposed on the second rim 1602, and the third microphone 1694-3 disposed on the first rim 1601 are illustrated in FIG. 16B, but the number and disposition of the microphone 1694 are not limited to an embodiment of FIG. 16B. In a case that the number of the microphone 1694 included in the wearable device 1600 is two or more, the wearable device 1600 may identify a direction of the sound signal by using a plurality of microphones disposed on different portions of the frame.

According to an embodiment, the optical devices 1682 and 1684 may transmit a virtual object transmitted from the at least one display 1650 to the wave guides 1633 and 1634. For example, the optical devices 1682 and 1684 may be projectors. The optical devices 1682 and 1684 may be disposed adjacent to the at least one display 1650 or may be included in the at least one display 1650 as a portion of the at least one display 1650. The first optical device 1682 may correspond to the first display 1650-1, and the second optical device 1684 may correspond to the second display 1650-2. The first optical device 1682 may transmit light outputted from the first display 1650-1 to the first waveguide 1633, and the second optical device 1684 may transmit light outputted from the second display 1650-2 to the second waveguide 1634.

In an embodiment, a camera 1640 may include an eye tracking camera (ET CAM) 1640-1, a motion recognition camera 1640-2 and/or the photographing camera 1640-3. The photographing camera 1640-3, the eye tracking camera 1640-1, and the motion recognition camera 1640-2 may be disposed at different positions on the frame and may perform different functions. The photographing camera 1640-3, the eye tracking camera 1640-1, and the motion recognition camera 1640-2 may be an example of the camera 225 of FIG. 2. The eye tracking camera 1640-1 may output data indicating a gaze of the user wearing the wearable device 1600. For example, the wearable device 1600 may detect the gaze from an image including the user's pupil, obtained through the eye tracking camera 1640-1. An example in which the eye tracking camera 1640-1 is disposed toward the user's right eye is illustrated in FIG. 16B, but the embodiment is not limited thereto, and the eye tracking camera 1640-1 may be disposed alone toward the user's left eye or may be disposed toward two eyes.

In an embodiment, the photographing camera 1640-3 may photograph a real image or background to be matched with a virtual image in order to implement the augmented reality or mixed reality content. The photographing camera may photograph an image of a specific object existing at a position viewed by the user and may provide the image to the at least one display 1650. The at least one display 1650 may display one image in which a virtual image provided through the optical devices 1682 and 1684 is overlapped with information on the real image or background including the image of the specific object obtained by using the photographing camera. In an embodiment, the photographing camera may be disposed on the bridge 1603 disposed between the first rim 1601 and the second rim 1602.

In an embodiment, the eye tracking camera 1640-1 may implement a more realistic augmented reality by matching the user's gaze with the visual information provided on the at least one display 1650, by tracking the gaze of the user wearing the wearable device 1600. For example, when the user looks at the front, the wearable device 1600 may naturally display environment information associated with the user's front on the at least one display 1650 at a position where the user is positioned. The eye tracking camera 1640-1 may be configured to capture an image of the user's pupil in order to determine the user's gaze. For example, the eye tracking camera 1640-1 may receive gaze detection light reflected from the user's pupil and may track the user's gaze based on the position and movement of the received gaze detection light. In an embodiment, the eye tracking camera 1640-1 may be disposed at a position corresponding to the user's left and right eyes. For example, the eye tracking camera 1640-1 may be disposed in the first rim 1601 and/or the second rim 1602 to face the direction in which the user wearing the wearable device 1600 is positioned.

The motion recognition camera 1640-2 may provide a specific event to the screen provided on the at least one display 1650 by recognizing the movement of the whole or portion of the user's body, such as the user's torso, hand, or face. The motion recognition camera 1640-2 may obtain a signal corresponding to motion by recognizing the user's gesture, and may provide a display corresponding to the signal to the at least one display 1650. A processor may identify a signal corresponding to the operation and may perform a preset function based on the identification. In an embodiment, the motion recognition camera 1640-2 may be disposed on the first rim 1601 and/or the second rim 1602.

In an embodiment, the camera 1640 included in the wearable device 1600 is not limited to the above-described eye tracking camera 1640-1 and the motion recognition camera 1640-2. For example, the wearable device 1600 may identify an external object included in the FoV by using the photographing camera 1640-3 disposed toward the user's FoV. Identifying the external object by the wearable device 1600 may be performed based on a sensor for identifying a distance between the wearable device 1600 and an external object, such as a depth sensor and/or a time of flight (ToF) sensor. The camera 1640 disposed toward the FoV may support an autofocus function and/or an optical image stabilization (OIS) function. For example, in order to obtain an image including a face of a user wearing the wearable device 1600, the wearable device 1600 may include a camera 1640 (e.g., a face tracking (FT) camera) disposed toward the face.

Although not illustrated, the wearable device 1600 according to an embodiment may further include a light source (e.g., LED) that emits light toward a subject (e.g., user's eyes, face, and/or an external object in the FoV) photographed by using the camera 1640. The light source may include an LED having an infrared wavelength. The light source may be disposed on at least one of the frame, and the hinge units 1606 and 1607.

In an embodiment, the battery module 1670 may supply power to electronic components of the wearable device 1600. In an embodiment, the battery module 1670 may be disposed in the first temple 1604 and/or the second temple 1605. For example, the battery module 1670 may be a plurality of battery modules 1670. The plurality of battery modules 1670, respectively, may be disposed on each of the first temple 1604 and the second temple 1605. In an embodiment, the battery module 1670 may be disposed at an end of the first temple 1604 and/or the second temple 1605.

In an embodiment, the antenna module 1675 may transmit the signal or power to the outside of the wearable device 1600 or may receive the signal or power from the outside. The antenna module 1675 may be electrically and/or operably connected to communication circuitry (e.g., the communication circuitry of FIG. 2) in the wearable device 1600. In an embodiment, the antenna module 1675 may be disposed in the first temple 1604 and/or the second temple 1605. For example, the antenna module 1675 may be disposed close to one surface of the first temple 1604 and/or the second temple 1605.

In an embodiment, the speakers 1692-1 and 1692-2 may output a sound signal to the outside of the wearable device 1600. A sound output module may be referred to as a speaker. In an embodiment, the speakers 1692-1 and 1692-2 may be disposed in the first temple 1604 and/or the second temple 1605 in order to be disposed adjacent to the ear of the user wearing the wearable device 1600. For example, the wearable device 1600 may include a second speaker 1692-2 disposed adjacent to the user's left ear by being disposed in the first temple 1604, and a first speaker 1692-1 disposed adjacent to the user's right ear by being disposed in the second temple 1605.

In an embodiment, the light emitting module (not illustrated) may include at least one light emitting element. The light emitting module may emit light of a color corresponding to a specific state or may emit light through an operation corresponding to the specific state in order to visually provide information on a specific state of the wearable device 1600 to the user. For example, when the wearable device 1600 requires charging, it may emit repeatedly red light at a specific timing. In an embodiment, the light emitting module may be disposed on the first rim 1601 and/or the second rim 1602.

Referring to FIG. 16B, according to an embodiment, the wearable device 1600 may include the printed circuit board (PCB) 1690. The PCB 1690 may be included in at least one of the first temple 1604 or the second temple 1605. The PCB 1690 may include an interposer disposed between at least two sub PCBs. On the PCB 1690, one or more hardware (e.g., hardware illustrated by the blocks described above with reference to FIG. 2) included in the wearable device 1600 may be disposed. The wearable device 1600 may include a flexible PCB (FPCB) for interconnecting the hardware.

According to an embodiment, the wearable device 1600 may include at least one of a gyro sensor, a gravity sensor, and/or an acceleration sensor for detecting the posture of the wearable device 1600 and/or the posture of a body part (e.g., a head) of the user wearing the wearable device 1600. Each of the gravity sensor and the acceleration sensor may measure gravity acceleration, and/or acceleration based on preset 3-dimensional axes (e.g., x-axis, y-axis, and z-axis) perpendicular to each other. The gyro sensor may measure angular velocity of each of preset 3-dimensional axes (e.g., x-axis, y-axis, and z-axis). At least one of the gravity sensor, the acceleration sensor, and the gyro sensor may be referred to as an inertial measurement unit (IMU). According to an embodiment, the wearable device 1600 may identify the user's motion and/or gesture performed to execute or stop a specific function of the wearable device 1600 based on the IMU.

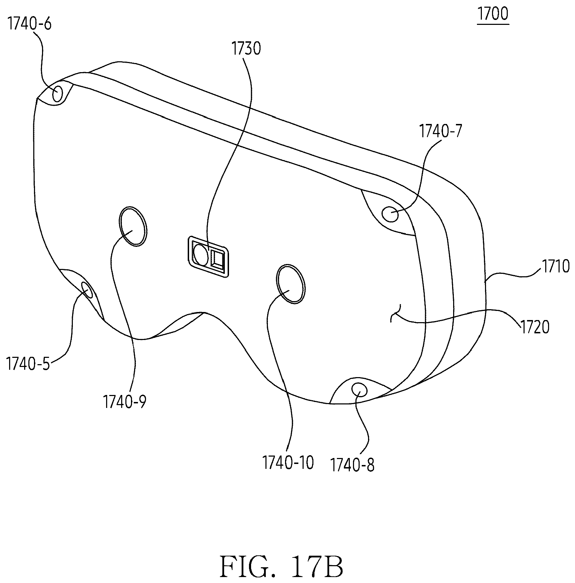

FIGS. 17A to 17B illustrate an example of an exterior of a wearable device 1700 according to an embodiment. The wearable device 101 of FIGS. 1A to 1B and FIG. 2 may include the wearable device 1700 of FIGS. 17A to 17B. According to an embodiment, an example of an exterior of a first surface 1710 of a housing of the wearable device 1700 is illustrated in FIG. 17A, and an example of an exterior of a second surface 1720 opposite to the first surface 1710 may be illustrated in FIG. 17B.

Referring to FIG. 17A, according to an embodiment, a first surface 1710 of the wearable device 1700 may have a form attachable to a body part (e.g., user's face) of a user. Although not illustrated, the wearable device 1700 may further include a strap for being fixed on the user's body part and/or one or more temples (e.g., the first temple 1604 and/or the second temple 1605 of FIGS. 16A to 16B). A first display 1750-1 for outputting an image to the left eye among the two eyes of the user and a second display 1750-2 for outputting an image to the right eye among the two eyes may be disposed on the first surface 1710. The wearable device 1700 may further include rubber or silicon packing, which are formed on the first surface 1710, for preventing interference by light (e.g., ambient light) different from the light emitted from the first display 1750-1 and the second display 1750-2.

According to an embodiment, the wearable device 1700 may include cameras 1740-3 and 1740-4 for photographing and/or tracking the user's two eyes adjacent to each of the first display 1750-1 and the second display 1750-2. The cameras 1740-3 and 1740-4 may be referred to as ET cameras. The wearable device 1700 according to an embodiment may include cameras 1740-1 and 1740-2 for photographing and/or recognizing the user's face. The cameras 1740-1 and 1740-2 may be referred to as the FT camera.

Referring to FIG. 17B, a camera (e.g., cameras 1740-5, 1740-6, 1740-7, 1740-8, 1740-9, 1740-10) and/or a sensor (e.g., depth sensor 1730) for obtaining information related to the external environment of the wearable device 1700 may be disposed on the second surface 1720 opposite to the first surface 1710 of FIG. 17A. For example, cameras 1740-5, 1740-6, 1740-7, 1740-8, 1740-9, 1740-10 may be disposed on the second surface 1720 to recognize an external object different from the wearable device 1700. For example, using cameras 1740-9 and 1740-10, the wearable device 1700 may obtain an image and/or media to be transmitted to each of the user's two eyes. The camera 1740-9 may be disposed on the second surface 1720 of the wearable device 1700 to obtain a frame to be displayed through the second display 1750-2 corresponding to the right eye among the two eyes. The camera 1740-10 may be disposed on the second surface 1720 of the wearable device 1700 to obtain a frame to be displayed through the first display 1750-1 corresponding to the left eye among the two eyes.

According to an embodiment, the wearable device 1700 may include a depth sensor 1730 disposed on the second surface 1720 to identify a distance between the wearable device 1700 and an external object. Using the depth sensor 1730, the wearable device 1700 may obtain spatial information (e.g., the depth map) on at least a portion of the FoV of the user wearing the wearable device 1700.

Although not illustrated, a microphone for obtaining sound outputted from an external object may be disposed on the second surface 1720 of the wearable device 1700. The number of microphones may be one or more according to an embodiment.

As described above, according to an embodiment, the wearable device 1700 may have a form factor for being worn on the user's head. The wearable device 1700 may provide a user experience based on a VST mode and/or a VR mode within a state of being worn on the head. By using the first display 1750-1 and the second display 1750-2, the wearable device 1700 may display one of the screens 131 and 132 of FIG. 1A. The wearable device 1700 may identify at least one actual light source in an external space including the wearable device 1700, by using the cameras 1740-5, 1740-6, 1740-7, 1740-8, 1740-9, and 1740-10. The wearable device 1700 may render a virtual space to be displayed through the first display 1750-1 and/or the second display 1750-2 by using a virtual light source corresponding to the actual light source. Based on the rendering, the wearable device 1700 may provide a user experience such as an actual light source recognized through the VST mode being moved to the VR mode.

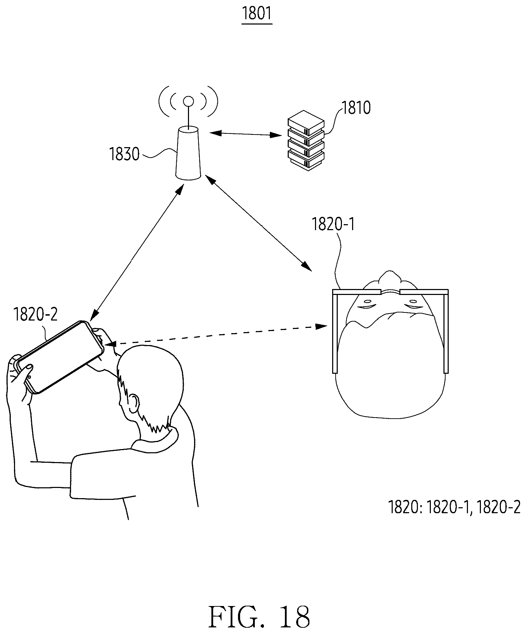

In an embodiment, the operation of the wearable device described above may be related to a metaverse service provided through a network. Hereinafter, an example of a metaverse service provided to a user based on a wearable device according to an embodiment will be described with reference to FIG. 18.

Metaverse is a compound word of the English words "Meta" meaning "virtual" and "transcendence" and "Universe" meaning cosmos, and refers to a three-dimensional virtual world in which social, economic, and cultural activities take place like a real world. Metaverse is a concept that has evolved one step further than a virtual reality (VR, cutting-edge technology that enables people to experience real-life experiences in a virtual world created by a computer), and it is characterized by using avatars to not only enjoy games or virtual reality, but also social and cultural activities like a reality. A metaverse service may provide media content for enhancing immersion in the virtual world, based on an augmented reality (AR), a virtual reality environment (VR), a mixed environment (MR), and/or an extended reality (XR).

For example, media content provided by the metaverse service may include social interaction content including avatar-based game, concert, party, and/or meeting. For example, the media content may include information for economic activities such as advertising, user created content, and/or sales and/or shopping of productions. Ownership of the user created content may be proved by a blockchain-based non-fungible token (NFT). The metaverse service may support economic activities based on real money and/or cryptocurrency. By the metaverse service, virtual content associated with the real world, such as digital twin or life logging, may be provided.

FIG. 18 is an exemplary diagram of a network environment 1801 in which a metaverse service is provided through a server 1810.

Referring to FIG. 18, a network environment 1801 may include a server 1810, a user terminal 1820 (e.g., a first terminal 1820-1 and a second terminal 1820-2), and a network connecting the server 1810 and the user terminal 1820. In the network environment 1801, the server 1810 may provide a metaverse service to the user terminal 1820. The network may be formed by at least one intermediate node 1830 including an access point (AP) and/or a base station. The user terminal 1820 may access the server 1810 through the network and output a user interface (UI) associated with a metaverse service to a user of the user terminal 1820. Based on the UI, the user terminal 1820 may obtain information to be inputted into the metaverse service from the user, or output information (e.g., multimedia content) associated with the metaverse service to the user.

In this case, the server 1810 provides a virtual space so that the user terminal 1820 may perform activities in the virtual space. In addition, the user terminal 1820 may represent information provided by the server 1810 to the user by installing an S/W agent to access the virtual space provided by the server 1810, or transmit information that the user wants to represent in the virtual space to the server. The S/W agent may be provided directly through the server 1810, downloaded from a public server, or embedded and provided when purchasing a terminal.

In an embodiment, the metaverse service may provide a service to the user terminal 1820 and/or a user by using the server 1810. The embodiment is not limited thereto, and the metaverse service may be provided through individual contacts between users. For example, in the network environment 1801, the metaverse service may be provided by a direct connection between the first terminal 1820-1 and the second terminal 1820-2, independently of the server 1810. Referring to FIG. 18, in the network environment 1801, the first terminal 1820-1 and the second terminal 1820-2 may be connected to each other through a network formed by at least one intermediate node 1830. In an embodiment in which the first terminal 1820-1 and the second terminal 1820-2 are directly connected, any one of the first terminal 1820-1 and the second terminal 1820-2 may perform a role of the server 1810. For example, a metaverse environment may be configured only with a device-to-device connection (e.g., a peer-to-peer (P2P) connection).

In an embodiment, the user terminal 1820 (or the user terminal 1820 including the first terminal 1820-1 and the second terminal 1820-2) may be made in various form factors, and it is characterized by including an output device for providing an image and/or sound to the user and an input device for inputting information into the metaverse service. An exemplary user terminal 1820 in various form factors may include a smartphone (e.g., the second terminal 1820-2), an AR device (e.g., the first terminal 1820-1), a VR device, an MR device, a Video See Through (VST) device, an Optical See Through (OST) device, a smart lens, a smart mirror, a TV capable of inputting and outputting, or a projector.

A network (e.g., a network formed by at least one intermediate node 1830) includes all of various broadband networks including 3G, 4G, and 5G and short-range networks (e.g., a wired network or a wireless network that directly connects the first terminal 1820-1 and the second terminal 1820-2) including Wi-Fi and BT. In an embodiment, the user terminal 1820 of FIG. 18 may include the wearable device 101 of FIGS. 1A to 1B and FIGS. 2 to 14, the wearable device of FIGS. 15, the wearable device 1600 of FIGS. 16A to 16B, and/or the wearable device 1700 of FIGS. 17A to 17B.

In an embodiment, a method in which a wearable device provides VR based on a real light source may be required. As described above, a wearable device (e.g., the wearable device of FIGS. 1A to 1B, and FIG. 2) according to an embodiment may comprise a camera (e.g., the camera 225 of FIG. 2), a display (e.g., the display 220 of FIG. 2), and a processor (e.g., the processor 210 of FIG. 2). The processor may be configured to obtain, by using an image (e.g., the images 410 and 420 of FIG. 4 and/or the image 1430 of FIG. 14) obtained from the camera, information associated with at least one real light source. The processor may be configured to receive, while displaying at least a portion of the image obtained from the camera on the display, an input to display a virtual space (e.g., the virtual space 140 of FIG. 1A and/or the virtual space 1420 of FIG. 14) on the display. The processor may be configured to determine, based on the input, a position of at least one virtual light source (e.g., the virtual light source 150 of FIGS. 1A to 1B, the virtual light sources 1031 and 1032 of FIGS. 10A to 10B, and/or the virtual light source 1120 of FIGS. 11A to 11B) in the virtual space using the information. The processor may be configured to display, based on a distance between a virtual object (e.g., the virtual objects 161 and 162 of the FIGS. 1A to 1B, the virtual object 1040 of FIGS. 10A to 10B, the virtual objects 1130, 1140, and 1150 of FIGS. 11A to 11B, the virtual object 1350 of FIG. 13, or the virtual objects 1441 and 1442 of FIG. 14) included in the virtual space and a position of the virtual space corresponding to the wearable device, the virtual object to which a visual effect with respect to the at least one virtual light source is applied on the display.

For example, the processor may be configured to perform, based on the distance exceeding a preset threshold, rendering with respect to the virtual object using the virtual effect.

For example, the processor may be configured to identify, based on whether the virtual object is included in a preset category for interaction with a user wearing the wearable device, whether to apply the visual effect to the virtual object.

For example, the processor may be configured to determine, based on the input to switch from a first preset mode for video see-through (VST) to a second preset mode for virtual reality (VR) associated with the virtual space, the position of the at least one virtual light source.

For example, the processor may be configured to display a visual object representing a shadow formed along a direction of a virtual light toward the virtual object from the position, on the display based on the visual effect.

For example, the processor may be configured to perform, based on at least one of color or brightness of the at least one real light source included in the information, perform rendering with respect to the virtual object.

For example, the processor may be configured to perform, based on a bright distribution of the image, rendering with respect to a boundary surface of the virtual space.

For example, the wearable device may comprise a sensor (e.g., the sensor 230 of FIG. 2). The image may be a first image. The processor may be configured to obtain data indicating a direction of the wearable device from the sensor. The processor may be configured to obtain, in a state of identifying a direction of the wearable device toward a second direction different from a first direction of the wearable device corresponding to the first image based on the data, a second image corresponding to the second direction from the camera. The processor may be configured to determine, based on a first position of the at least one real light source in the first image and a second position of the at least one real light source in the second image, a position of the at least one virtual light source within the virtual space.

As described above, a method of a wearable device according to an embodiment may comprise obtaining, by using an image obtained from a camera of the wearable device, information associated with at least one real light source. The method may comprise receiving, while displaying at least a portion of the image obtained from the camera on a display of the wearable device, an input to display a virtual space on the display. The method may comprise determining, based on the input, a position of at least one virtual light source in the virtual space using the information. The method may comprise display, based on a distance between a virtual object included in the virtual space and a position of the virtual space corresponding to the wearable device, the virtual object to which a visual effect with respect to the at least one virtual light source is applied on the display.

For example, the displaying may comprise performing, based on the distance exceeding a preset threshold, rendering with respect to the virtual object using the virtual effect.

For example, the displaying may comprise identifying, based on whether the virtual object is included in a preset category for interaction with a user wearing the wearable device, whether to apply the visual effect to the virtual object.

For example, the identifying may comprise determining, based on the input to switch from a first preset mode for video see-through (VST) to a second preset mode for virtual reality (VR) associated with the virtual space, the position of the at least one virtual light source.

For example, the displaying may comprise displaying a visual object representing a shadow formed along a direction of a virtual light toward the virtual object from the position, on the display based on the visual effect.

For example, the displaying may comprise performing, based on at least one of color or brightness of the at least one real light source included in the information, perform rendering with respect to the virtual object.

For example, the processor may be configured to perform, based on a bright distribution of the image, rendering with respect to a boundary surface of the virtual space.

For example, the image may be a first image. The obtaining may comprise obtaining, in a state of identifying a direction of the wearable device toward a second direction different from a first direction of the wearable device using a sensor of the wearable device, a second image corresponding to the second direction from the camera. The obtaining may comprise determining, based on a first position of the at least one real light source in the first image and a second position of the at least one real light source in the second image, a position of the at least one virtual light source within the virtual space.

As described above, a wearable device (e.g., the wearable device of FIGS. 1A to 1B, and FIG. 2) according to an embodiment may comprise a camera (e.g., the camera 225 of FIG. 2), a display (e.g., the display 220 of FIG. 2), and a processor (e.g., the processor 210 of FIG. 2). The processor may be configured to obtain, by using the camera, information associated with at least one real light source disposed in an external space including the wearable device. The processor may be configured to identify, based on the information, a first region of a virtual space (e.g., the virtual space 140 of FIG. 1A and/or the virtual space 1420 of FIG. 14) linked with a virtual light source (e.g., the virtual light source 150 of FIGS. 1A to 1B, the virtual light sources 1031 and 1032 of FIGS. 10A to 10B, and/or the virtual light source 1120 of FIGS. 11A to 11B) corresponding to the real light source. The processor may be configured to perform, in a state of displaying the virtual space distinguished from the external space on the display, from among a plurality of virtual objects included in the virtual space, rendering with respect to a first virtual object (e.g., the virtual object 1130 of FIGS. 11A to 11B) included in the first region based on a visual effect associated with the virtual light source. The processor may be configured to perform, on the display, from among the plurality of virtual objects, rendering with respect to a second virtual object (e.g., the virtual objects 1140 and 1150 of FIGS. 11A to 11B) included in a second region different from the first region, independently of the visual effect.

For example, the processor may be configured to perform, in the second region spaced apart from a reference position of the virtual space by a preset distance or less, rendering with respect to the second virtual object included in a preset category for interaction, independently of the visual effect.

For example, the processor may be configured to display, based on the visual effect, among different planes of the first virtual object, a first plane facing the virtual light source according to higher brightness than that of a second plane different from the first plane.

For example, the processor may be configured to display, based on the visual effect, from the first virtual object, a shadow extended along a direction from the virtual light source toward the first virtual object.

As described above, a method of a wearable device according to an embodiment may comprise obtaining, by using a camera of the wearable device, information associated with at least one real light source disposed in an external space including the wearable device. The method may comprise identifying, based on the information, a first region of a virtual space linked with a virtual light source corresponding to the real light source. The method may comprise performing, in a state of displaying the virtual space distinguished from the external space on the display, from among a plurality of virtual objects included in the virtual space, rendering with respect to a first virtual object included in the first region based on a visual effect associated with the virtual light source. The method may comprise performing, on the display, from among the plurality of virtual objects, rendering with respect to a second virtual object included in a second region different from the first region, independently of the visual effect.

For example, the performing rendering with respect to the second virtual object may comprise performing, in the second region spaced apart from a reference position of the virtual space by a preset distance or less, rendering with respect to the second virtual object included in a preset category for interaction, independently of the visual effect.

For example, the performing rendering with respect to the first virtual object may comprise displaying, based on the visual effect, among different planes of the first virtual object, a first plane facing the virtual light source according to higher brightness than that of a second plane different from the first plane.

For example, the performing rendering with respect to the first virtual object may comprise displaying, based on the visual effect, from the first virtual object, a shadow extended along a direction from the virtual light source toward the first virtual object.

As described above, a wearable device according to an embodiment may comprise a camera, a display, memory storing instructions, and a processor. The instructions, when executed by the processor, may cause the wearable device to obtain, by using an image obtained from the camera, information associated with at least one real light source. The instructions, when executed by the processor, may cause the wearable device to receive, while displaying at least a portion of the image obtained from the camera on the display, an input to display a virtual space on the display. The instructions, when executed by the processor, may cause the wearable device to determine, based on the input, a position of at least one virtual light source in the virtual space using the information. The instructions, when executed by the processor, may cause the wearable device to obtain a distance between a virtual object included in the virtual space and a position of a user within the virtual space. The instructions, when executed by the processor, may cause the wearable device to display, based on obtaining the distance greater than a preset distance, the virtual object to which a visual effect with respect to the at least one virtual light source is applied on the display.

For example, the instructions, when executed by the processor, may cause the wearable device to apply, using a shape of the at least one real light source indicated by the information, the visual effect to the virtual object.

For example, the instructions, when executed by the processor, may cause the wearable device to identify, based on whether the virtual object is included in a preset category for interaction with a user wearing the wearable device, whether to apply the visual effect to the virtual object.

For example, the instructions, when executed by the processor, may cause the wearable device to determine, based on the input to switch from a first preset mode for video see-through (VST) to a second preset mode for virtual reality (VR) associated with the virtual space, the position of the at least one virtual light source. The instructions, when executed by the processor, may cause the wearable device to display a visual object representing a shadow formed along a direction of a virtual light toward the virtual object from the position, on the display based on the visual effect.

For example, the instructions, when executed by the processor, may cause the wearable device to apply, using color or brightness associated with at least one of weather or time, a visual effect with respect to the at least one light source to the virtual object.

For example, the instructions, when executed by the processor, may cause the wearable device to perform, based on at least one of color or brightness of the at least one real light source included in the information, perform rendering with respect to the virtual object.

For example, the instructions, when executed by the processor, may cause the wearable device to perform rendering with respect to the virtual space such that a surface of the virtual space has a texture based on a brightness pattern represented by the image.

For example, the wearable device may comprise a sensor. The image may be a first image. The instructions, when executed by the processor, may cause the wearable device to obtain data indicating a direction of the wearable device from the sensor. The instructions, when executed by the processor, may cause the wearable device to obtain, in a state of identifying a direction of the wearable device toward a second direction different from a first direction of the wearable device corresponding to the first image based on the data, a second image corresponding to the second direction from the camera. The instructions, when executed by the processor, may cause the wearable device to determine, based on a first position of the at least one real light source in the first image and a second position of the at least one real light source in the second image, a position of the at least one virtual light source within the virtual space.

For example, the instructions, when executed by the processor, may cause the wearable device to determine, by comparing the distance and the preset distance that is set to cease the visual effect based on the virtual light source, whether to apply the visual effect to the virtual object.

In an embodiment, a method of a wearable device may be provided. The method may comprise obtaining, by using an image obtained from a camera of the wearable device, information associated with at least one real light source. The method may comprise receiving, while displaying at least a portion of the image obtained from the camera on the display of the wearable device, an input to display a virtual space on the display. The method may comprise determining, based on the input, a position of at least one virtual light source in the virtual space using the information. The method may comprise obtaining a distance between a virtual object included in the virtual space and a position of a user within the virtual space. The method may comprise displaying, based on obtaining the distance greater than a preset distance, the virtual object to which a visual effect with respect to the at least one virtual light source is applied on the display.

For example, the displaying may comprise applying, using a shape of the at least one real light source indicated by the information, the visual effect to the virtual object.

For example, the displaying may comprise identifying, based on whether the virtual object is included in a preset category for interaction with a user wearing the wearable device, whether to apply the visual effect to the virtual object.

For example, the identifying may comprise determining, based on the input to switch from a first preset mode for video see-through (VST) to a second preset mode for virtual reality (VR) associated with the virtual space, the position of the at least one virtual light source. The identifying may comprise displaying a visual object representing a shadow formed along a direction of a virtual light toward the virtual object from the position, on the display based on the visual effect.

For example, the displaying may comprise applying, using color or brightness associated with at least one of weather or time, a visual effect with respect to the at least one light source to the virtual object.

For example, the displaying may comprise performing, based on at least one of color or brightness of the at least one real light source included in the information, rendering with respect to the virtual object.

For example, the display may comprise performing, based on a brightness distribution of the image, rendering with respect to a boundary surface of the virtual space.

The device described above may be implemented as a hardware component, a software component, and/or a combination of a hardware component and a software component. For example, the devices and components described in the embodiments may be implemented by using one or more general purpose computers or special purpose computers, such as a processor, controller, arithmetic logic unit (ALU), digital signal processor, microcomputer, field programmable gate array (FPGA), programmable logic unit (PLU), microprocessor, or any other device capable of executing and responding to instructions. The processing device may perform an operating system (OS) and one or more software applications executed on the operating system. In addition, the processing device may access, store, manipulate, process, and generate data in response to the execution of the software. For convenience of understanding, there is a case that one processing device is described as being used, but a person who has ordinary knowledge in the relevant technical field may see that the processing device may include a plurality of processing elements and/or a plurality of types of processing elements. For example, the processing device may include a plurality of processors or one processor and one controller. In addition, another processing configuration, such as a parallel processor, is also possible.

The software may include a computer program, code, instruction, or a combination of one or more thereof, and may configure the processing device to operate as desired or may command the processing device independently or collectively. The software and/or data may be embodied in any type of machine, component, physical device, computer storage medium, or device, to be interpreted by the processing device or to provide commands or data to the processing device. The software may be distributed on network-connected computer systems and stored or executed in a distributed manner. The software and data may be stored in one or more computer-readable recording medium.

The method according to the embodiment may be implemented in the form of a program command that may be performed through various computer means and recorded on a computer-readable medium. In this case, the medium may continuously store a program executable by the computer or may temporarily store the program for execution or download. In addition, the medium may be various recording means or storage means in the form of a single or a combination of several hardware, but is not limited to a medium directly connected to a certain computer system, and may exist distributed on the network. Examples of media may include a magnetic medium such as a hard disk, floppy disk, and magnetic tape, optical recording medium such as a CD-ROM and DVD, magneto-optical medium, such as a floptical disk, and those configured to store program instructions, including ROM, RAM, flash memory, and the like. In addition, examples of other media may include recording media or storage media managed by app stores that distribute applications, sites that supply or distribute various software, servers, and the like.

Although the embodiments have been described above with reference to limited examples and drawings, various modifications and variations may be made from the above description by those skilled in the art. For example, even if the described technologies are performed in a different order from the described method, and/or the components of the described system, structure, device, circuit, and the like are coupled or combined in a different form from the described method, appropriate results may be achieved.

Therefore, other implementations, other embodiments, and those equivalent to the scope of the claims are in the scope of the claims described later. The invention is defined by the appended claims.

## Claims

1. A wearable device comprising:
a camera;
a display;
memory storing instructions; and
a processor, wherein the instructions, when executed by the processor, cause the wearable device to:
obtain, by using an image obtained from the camera, information associated with at least one real light source;
receive, while displaying at least a portion of the image obtained from the camera on the display, an input to display a virtual space on the display;
determine, based on the input, a position of at least one virtual light source in the virtual space using the information;
obtain a distance between a virtual object included in the virtual space and a position of a user within the virtual space; and
display, based on obtaining the distance greater than a preset distance, the virtual object to which a visual effect with respect to the at least one virtual light source is applied on the display.

2. The wearable device of claim 1, wherein the instructions, when executed by the processor, cause the wearable device to:
apply, using a shape of the at least one real light source indicated by the information, the visual effect to the virtual object.

3. The wearable device of claim 1, wherein the instructions, when executed by the processor, cause the wearable device to:
identify, based on whether the virtual object is included in a preset category for interaction with a user wearing the wearable device, whether to apply the visual effect to the virtual object.

4. The wearable device of claim 1, wherein the instructions, when executed by the processor, cause the wearable device to:
determine, based on the input to switch from a first preset mode for video see-through (VST) to a second preset mode for virtual reality (VR) associated with the virtual space, the position of the at least one virtual light source;
display a visual object representing a shadow formed along a direction of a virtual light toward the virtual object from the position, on the display based on the visual effect.

5. The wearable device of claim 1, wherein the instructions, when executed by the processor, cause the wearable device to:
apply, using color or brightness associated with at least one of weather or time, a visual effect with respect to the at least one light source to the virtual object.

6. The wearable device of claim 1, wherein the instructions, when executed by the processor, cause the wearable device to:
perform, based on at least one of color or brightness of the at least one real light source included in the information, perform rendering with respect to the virtual object.

7. The wearable device of claim 1, wherein the instructions, when executed by the processor, cause the wearable device to:
perform rendering with respect to the virtual space such that a surface of the virtual space has a texture based on a brightness pattern represented by the image.

8. The wearable device of claim 1, further comprising a sensor, and wherein the image is a first image,
wherein the instructions, when executed by the processor, cause the wearable device to:
obtain data indicating a direction of the wearable device from the sensor;
obtain, in a state of identifying a direction of the wearable device toward a second direction different from a first direction of the wearable device corresponding to the first image based on the data, a second image corresponding to the second direction from the camera;
determine, based on a first position of the at least one real light source in the first image and a second position of the at least one real light source in the second image, a position of the at least one virtual light source within the virtual space.

9. The wearable device of claim 1, wherein the instructions, when executed by the processor, cause the wearable device to:
determine, by comparing the distance and the preset distance that is set to cease the visual effect based on the virtual light source, whether to apply the visual effect to the virtual object.

10. A method of a wearable device, comprising:
obtaining, by using an image obtained from a camera of the wearable device, information associated with at least one real light source;
receiving, while displaying at least a portion of the image obtained from the camera on a display of the wearable device, an input to display a virtual space on the display;
determining, based on the input, a position of at least one virtual light source in the virtual space using the information;
obtaining a distance between a virtual object included in the virtual space and a position of a user within the virtual space; and
displaying, based on obtaining the distance greater than a preset distance that is set to cease a visual effect based on the virtual light source, the virtual object to which the visual effect with respect to the at least one virtual light source is applied on the display.

11. The method of claim 10, wherein the displaying comprising:
applying, using a shape of the at least one real light source indicated by the information, the visual effect to the virtual object.

12. The method of claim 10, wherein the displaying comprising:
identifying, based on whether the virtual object is included in a preset category for interaction with a user wearing the wearable device, whether to apply the visual effect to the virtual object.

13. The method of claim 10, wherein the identifying comprising:
determining, based on the input to switch from a first preset mode for video see-through (VST) to a second preset mode for virtual reality (VR) associated with the virtual space, the position of the at least one virtual light source;
displaying a visual object representing a shadow formed along a direction of a virtual light toward the virtual object from the position, on the display based on the visual effect.

14. The method of claim 10, wherein the displaying comprising:
applying, using color or brightness associated with at least one of weather or time, a visual effect with respect to the at least one light source to the virtual object.

15. The method of claim 10, wherein the displaying comprising:
performing, based on at least one of color or brightness of the at least one real light source included in the information, rendering with respect to the virtual object.

## Patentansprüche

1. Am Körper tragbare Vorrichtung, umfassend:
eine Kamera;
eine Anzeige;
einen Speicher, der Anweisungen speichert; und
einen Prozessor, wobei die Anweisungen, wenn sie durch den Prozessor ausgeführt werden, die am Körper tragbare Vorrichtung zu Folgendem veranlassen:
Erlangen von Informationen, die mindestens einer realen Lichtquelle zugeordnet sind, durch Verwenden eines Bildes, das von der Kamera erlangt wird;
während mindestens ein Abschnitt des Bildes, das von der Kamera erlangt wird, auf der Anzeige angezeigt wird, Empfangen einer Eingabe, um einen virtuellen Raum auf der Anzeige anzuzeigen;
Bestimmen, basierend auf der Eingabe, einer Position mindestens einer virtuellen Lichtquelle in dem virtuellen Raum unter Verwendung der Informationen;
Erlangen einer Entfernung zwischen einem virtuellen Objekt, das in dem virtuellen Raum enthalten ist, und einer Position eines Benutzers innerhalb des virtuellen Raums; und
basierend auf einem Erlangen, dass die Entfernung größer als eine voreingestellte Entfernung ist, Anzeigen des virtuellen Objekts, auf das ein visueller Effekt in Bezug auf die mindestens eine virtuelle Lichtquelle angewendet wird, auf der Anzeige.

2. Am Körper tragbare Vorrichtung nach Anspruch 1, wobei die Anweisungen, wenn sie durch den Prozessor ausgeführt werden, die am Körper tragbare Vorrichtung zu Folgendem veranlassen:
Anwenden des visuellen Effekts auf das virtuelle Objekt unter Verwendung einer Form der mindestens einen realen Lichtquelle, die durch die Informationen angegeben wird.

3. Am Körper tragbare Vorrichtung nach Anspruch 1, wobei die Anweisungen, wenn sie durch den Prozessor ausgeführt werden, die am Körper tragbare Vorrichtung zu Folgendem veranlassen:
basierend darauf, ob das virtuelle Objekt in einer voreingestellten Kategorie für die Interaktion mit einem Benutzer, der die am Körper tragbare Vorrichtung am Körper trägt, enthalten ist, Identifizieren, ob der visuelle Effekt auf das virtuelle Objekt anzuwenden ist.

4. Am Körper tragbare Vorrichtung nach Anspruch 1, wobei die Anweisungen, wenn sie durch den Prozessor ausgeführt werden, die am Körper tragbare Vorrichtung zu Folgendem veranlassen:
basierend auf der Eingabe zum Umschalten von einem ersten voreingestellten Modus für Video-See-Through (VST) auf einen zweiten voreingestellten Modus für virtuelle Realität (VR), der dem virtuellen Raum zugeordnet ist, Bestimmen der Position der mindestens einen virtuellen Lichtquelle;
Anzeigen eines visuellen Objektes, das einen Schatten darstellt, der entlang einer Richtung eines virtuellen Lichts zu dem virtuellen Objekt hin von der Position ausgebildet wird, auf der Anzeige basierend auf dem visuellen Effekt.

5. Am Körper tragbare Vorrichtung nach Anspruch 1, wobei die Anweisungen, wenn sie durch den Prozessor ausgeführt werden, die am Körper tragbare Vorrichtung zu Folgendem veranlassen:
Anwenden eines visuellen Effekts in Bezug auf die mindestens eine Lichtquelle auf das virtuelle Objekt unter Verwendung von Farbe oder Helligkeit, die mindestens einem von Wetter oder Zeit zugeordnet ist.

6. Am Körper tragbare Vorrichtung nach Anspruch 1, wobei die Anweisungen, wenn sie durch den Prozessor ausgeführt werden, die am Körper tragbare Vorrichtung zu Folgendem veranlassen:
Durchführen, basierend auf mindestens einem von Farbe oder Helligkeit der mindestens einen realen Lichtquelle, die in den Informationen enthalten ist, Durchführen eines Renderns in Bezug auf das virtuelle Objekt.

7. Am Körper tragbare Vorrichtung nach Anspruch 1, wobei die Anweisungen, wenn sie durch den Prozessor ausgeführt werden, die am Körper tragbare Vorrichtung zu Folgendem veranlassen:
Durchführen des Renderns in Bezug auf den virtuellen Raum, sodass eine Oberfläche des virtuellen Raums eine Textur basierend auf einem Helligkeitsmuster aufweist, das durch das Bild dargestellt wird.

8. Am Körper tragbare Vorrichtung nach Anspruch 1, ferner umfassend einen Sensor, und wobei das Bild ein erstes Bild ist,
wobei die Anweisungen, wenn sie durch den Prozessor ausgeführt werden, die am Körper tragbare Vorrichtung zu Folgendem veranlassen:
Erlangen von Daten, die eine Richtung der am Körper tragbaren Vorrichtung angeben, von dem Sensor;
Erlangen, in einem Zustand eines Identifizierens einer Richtung der am Körper tragbaren Vorrichtung zu einer zweiten Richtung, die sich von einer ersten Richtung der am Körper tragbaren Vorrichtung unterscheidet, die dem ersten Bild entspricht, basierend auf den Daten, eines zweiten Bildes, das der zweiten Richtung entspricht, von der Kamera;
basierend auf einer ersten Position der mindestens einen realen Lichtquelle in dem ersten Bild und einer zweiten Position der mindestens einen realen Lichtquelle in dem zweiten Bild, Bestimmen einer Position der mindestens einen virtuellen Lichtquelle innerhalb des virtuellen Raums.

9. Am Körper tragbare Vorrichtung nach Anspruch 1, wobei die Anweisungen, wenn sie durch den Prozessor ausgeführt werden, die am Körper tragbare Vorrichtung zu Folgendem veranlassen:
durch Vergleichen der Entfernung und der voreingestellten Entfernung, die so eingestellt ist, dass sie den visuellen Effekt basierend auf der virtuellen Lichtquelle beendet, Bestimmen, ob der visuelle Effekt auf das virtuelle Objekt anzuwenden ist.

10. Verfahren einer am Körper tragbaren Vorrichtung, umfassend:
Erlangen von Informationen, die mindestens einer realen Lichtquelle zugeordnet sind, durch Verwenden eines Bildes, das von einer Kamera der am Körper tragbaren Vorrichtung erlangt wird;
während mindestens ein Abschnitt des Bildes, das von der Kamera erlangt wird, auf einer Anzeige der am Körper tragbaren Vorrichtung angezeigt wird, Empfangen einer Eingabe, um einen virtuellen Raum auf der Anzeige anzuzeigen;
Bestimmen, basierend auf der Eingabe, einer Position mindestens einer virtuellen Lichtquelle in dem virtuellen Raum unter Verwendung der Informationen;
Erlangen einer Entfernung zwischen einem virtuellen Objekt, das in dem virtuellen Raum enthalten ist, und einer Position eines Benutzers innerhalb des virtuellen Raums; und
basierend auf einem Erlangen, dass die Entfernung größer als eine voreingestellte Entfernung ist, die eingestellt ist, um einen visuellen Effekt basierend auf der virtuellen Lichtquelle zu beenden, Anzeigen des virtuellen Objekts, auf das der visuelle Effekt in Bezug auf die mindestens eine virtuelle Lichtquelle angewendet wird, auf der Anzeige.

11. Verfahren nach Anspruch 10, wobei das Anzeigen Folgendes umfasst:
Anwenden des visuellen Effekts auf das virtuelle Objekt unter Verwendung einer Form der mindestens einen realen Lichtquelle, die durch die Informationen angegeben wird.

12. Verfahren nach Anspruch 10, wobei das Anzeigen Folgendes umfasst:
basierend darauf, ob das virtuelle Objekt in einer voreingestellten Kategorie für die Interaktion mit einem Benutzer, der die am Körper tragbare Vorrichtung am Körper trägt, enthalten ist, Identifizieren, ob der visuelle Effekt auf das virtuelle Objekt anzuwenden ist.

13. Verfahren nach Anspruch 10, wobei das Identifizieren Folgendes umfasst:
basierend auf der Eingabe zum Umschalten von einem ersten voreingestellten Modus für Video-See-Through (VST) auf einen zweiten voreingestellten Modus für virtuelle Realität (VR), der dem virtuellen Raum zugeordnet ist, Bestimmen der Position der mindestens einen virtuellen Lichtquelle;
Anzeigen eines visuellen Objektes, das einen Schatten darstellt, der entlang einer Richtung eines virtuellen Lichts zu dem virtuellen Objekt hin von der Position ausgebildet wird, auf der Anzeige basierend auf dem visuellen Effekt.

14. Verfahren nach Anspruch 10, wobei das Anzeigen Folgendes umfasst:
Anwenden eines visuellen Effekts in Bezug auf die mindestens eine Lichtquelle auf das virtuelle Objekt unter Verwendung von Farbe oder Helligkeit, die mindestens einem von Wetter oder Zeit zugeordnet ist.

15. Verfahren nach Anspruch 10, wobei das Anzeigen Folgendes umfasst:
basierend auf mindestens einem von Farbe oder Helligkeit der mindestens einen realen Lichtquelle, die in den Informationen enthalten ist, Durchführen eines Renderns in Bezug auf das virtuelle Objekt.

## Revendications

1. Dispositif à porter sur soi comprenant :
une caméra ;
un dispositif d'affichage ;
une mémoire stockant des instructions ; et
un processeur, lesdites instructions, lorsqu'elles sont exécutées par le processeur, amenant le dispositif à porter sur soi à :
obtenir, à l'aide d'une image obtenue à partir de la caméra, des informations associées à au moins une source de lumière réelle ;
recevoir, tout en affichant au moins une partie de l'image obtenue à partir de la caméra sur le dispositif d'affichage, une entrée pour afficher un espace virtuel sur le dispositif d'affichage ;
déterminer, sur la base de l'entrée, une position d'au moins une source de lumière virtuelle dans l'espace virtuel à l'aide des informations ;
obtenir une distance entre un objet virtuel compris dans l'espace virtuel et une position d'un utilisateur à l'intérieur de l'espace virtuel ; et
afficher, sur la base de l'obtention de la distance supérieure à une distance prédéfinie, l'objet virtuel, auquel un effet visuel par rapport à l'au moins une source de lumière virtuelle est appliqué, sur le dispositif d'affichage.

2. Dispositif à porter sur soi de la revendication 1, lesdites instructions, lorsqu'elles sont exécutées par le processeur, amenant le dispositif à porter sur soi à :
appliquer, à l'aide d'une forme de l'au moins une source de lumière réelle indiquée par les informations, l'effet visuel à l'objet virtuel.

3. Dispositif à porter sur soi de la revendication 1, lesdites instructions, lorsqu'elles sont exécutées par le processeur, amenant le dispositif à porter sur soi à :
identifier, sur la base que l'objet virtuel est compris ou non dans une catégorie prédéfinie pour une interaction avec un utilisateur portant le dispositif à porter sur soi, si l'effet visuel doit être appliqué à l'objet virtuel.

4. Dispositif à porter sur soi de la revendication 1, lesdites instructions, lorsqu'elles sont exécutées par le processeur, amenant le dispositif à porter sur soi à :
déterminer, sur la base de l'entrée pour passer d'un premier mode prédéfini pour le semi-transparent vidéo (VST) à un second mode prédéfini pour la réalité virtuelle (VR) associée à l'espace virtuel, la position de l'au moins une source de lumière virtuelle ;
afficher un objet visuel représentant une ombre formée le long d'une direction d'une lumière virtuelle vers l'objet virtuel à partir de la position, sur le dispositif d'affichage sur la base de l'effet visuel.

5. Dispositif à porter sur soi de la revendication 1, lesdites instructions, lorsqu'elles sont exécutées par le processeur, amenant le dispositif à porter sur soi à :
appliquer, à l'aide de la couleur ou de la luminosité associée à au moins une des conditions météorologiques ou temporelles, un effet visuel par rapport à l'au moins une source de lumière à l'objet virtuel.

6. Dispositif à porter sur soi de la revendication 1, lesdites instructions, lorsqu'elles sont exécutées par le processeur, amenant le dispositif à porter sur soi à :
réaliser, sur la base d'au moins l'une d'une couleur ou d'une luminosité de l'au moins une source de lumière réelle comprise dans les informations, réaliser le rendu par rapport à l'objet virtuel.

7. Dispositif à porter sur soi de la revendication 1, lesdites instructions, lorsqu'elles sont exécutées par le processeur, amenant le dispositif à porter sur soi à :
réaliser le rendu par rapport à l'espace virtuel de sorte qu'une surface de l'espace virtuel présente une texture sur la base d'un motif de luminosité représenté par l'image.

8. Dispositif à porter sur soi de la revendication 1, comprenant en outre un capteur, et ladite image étant une première image,
lesdites instructions, lorsqu'elles sont exécutées par le processeur, amenant le dispositif à porter sur soi à : obtenir des données indiquant une direction du dispositif à porter sur soi à partir du capteur ;
obtenir, dans un état d'identification d'une direction du dispositif à porter sur soi vers une seconde direction différente d'une première direction du dispositif à porter sur soi correspondant à la première image sur la base des données, une seconde image correspondant à la seconde direction à partir de la caméra ;
déterminer, sur la base d'une première position de l'au moins une source de lumière réelle dans la première image et d'une seconde position de l'au moins une source de lumière réelle dans la seconde image, une position de l'au moins une source de lumière virtuelle dans l'espace virtuel.

9. Dispositif à porter sur soi de la revendication 1, lesdites instructions, lorsqu'elles sont exécutées par le processeur, amenant le dispositif à porter sur soi à :
déterminer, en comparant la distance et la distance prédéfinie qui est définie pour mettre fin à l'effet visuel sur la base de la source de lumière virtuelle, si l'effet visuel doit être appliqué à l'objet virtuel.

10. Procédé d'un dispositif à porter sur soi, comprenant :
l'obtention, à l'aide d'une image obtenue à partir d'une caméra du dispositif à porter sur soi, des informations associées à au moins une source de lumière réelle ;
la réception, tout en affichant au moins une partie de l'image obtenue à partir de la caméra sur un dispositif d'affichage du dispositif à porter sur soi, d'une entrée pour afficher un espace virtuel sur le dispositif d'affichage ;
la détermination, sur la base de l'entrée, d'une position d'au moins une source de lumière virtuelle dans l'espace virtuel à l'aide des informations ;
l'obtention d'une distance entre un objet virtuel compris dans l'espace virtuel et une position d'un utilisateur à l'intérieur de l'espace virtuel ; et
l'affichage, sur la base de l'obtention de la distance supérieure à une distance prédéfinie qui est définie pour mettre fin à un effet visuel sur la base de la source de lumière virtuelle, de l'objet virtuel auquel l'effet visuel par rapport à l'au moins une source de lumière virtuelle est appliqué sur le dispositif d'affichage.

11. Procédé de la revendication 10, ledit affichage comprenant :
l'application, à l'aide d'une forme de l'au moins une source de lumière réelle indiquée par les informations, de l'effet visuel à l'objet virtuel.

12. Procédé de la revendication 10, ledit affichage comprenant :
l'identification, sur la base que l'objet virtuel est compris ou non dans une catégorie prédéfinie pour une interaction avec un utilisateur portant le dispositif à porter sur soi, pour savoir si l'effet visuel doit être appliqué à l'objet virtuel.

13. Procédé de la revendication 10, ladite identification comprenant :
la détermination, sur la base de l'entrée pour passer d'un premier mode prédéfini pour le semi-transparent vidéo (VST) à un second mode prédéfini pour la réalité virtuelle (VR) associée à l'espace virtuel, de la position de l'au moins une source de lumière virtuelle ;
l'affichage d'un objet visuel représentant une ombre formée le long d'une direction d'une lumière virtuelle vers l'objet virtuel à partir de la position, sur le dispositif d'affichage sur la base de l'effet visuel.

14. Procédé de la revendication 10, ledit affichage comprenant :
l'application, à l'aide de la couleur ou de la luminosité associée à au moins une des conditions météorologiques ou temporelles, d'un effet visuel par rapport à l'au moins une source de lumière à l'objet virtuel.

15. Procédé de la revendication 10, ledit affichage comprenant :
la réalisation, sur la base d'au moins l'une d'une couleur ou d'une luminosité de l'au moins une source de lumière réelle comprise dans les informations, du rendu par rapport à l'objet virtuel.
